(19) Europäisches Patentamt
European Patent Office
Office européen des brevets

(11) **EP 1 636 079 B1**

(12) # FASCICULE DE BREVET EUROPEEN

(45) Date de publication et mention de la délivrance du brevet:
**20.08.2008 Bulletin 2008/34**

(21) Numéro de dépôt: **04742818.0**

(22) Date de dépôt: **24.05.2004**

(51) Int Cl.:
***B60W 10/00*** *(2006.01)*   ***B60W 20/00*** *(2006.01)*

(86) Numéro de dépôt international:
**PCT/FR2004/001278**

(87) Numéro de publication internationale:
**WO 2004/106100 (09.12.2004 Gazette 2004/50)**

(54) **PROCEDE ET DISPOSITIF DE COMMANDE D'UN GROUPE MOTOPROPULSEUR AVEC DES CONTROLES MECANIQUE ET ELECTRIQUE SEPARES**

STEUERVORRICHTUNG UND -VERFAHREN FÜR EINE MOTORANTRIEBSEINHEIT MIT GETRENNTER MECHANISCHER UND ELEKTRISCHER STEUERUNG

CONTROL DEVICE AND METHOD FOR A MOTOR PROPULSION UNIT WITH SEPARATE MECHANICAL AND ELECTRICAL CONTROLS

(84) Etats contractants désignés:
**AT BE BG CH CY CZ DE DK EE ES FI FR GB GR HU IE IT LI LU MC NL PL PT RO SE SI SK TR**

(30) Priorité: **23.05.2003 FR 0306217**
**23.05.2003 FR 0306219**
**23.05.2003 FR 0306218**
**23.05.2003 FR 0306220**

(43) Date de publication de la demande:
**22.03.2006 Bulletin 2006/12**

(73) Titulaire: **RENAULT S.A.S.**
**92100 Boulogne Billancourt (FR)**

(72) Inventeurs:
• **ROYER, Laurent**
**F-75012 Paris (FR)**

• **GOELZER, Anne**
**F-31000 Toulouse (FR)**
• **PICHON, Yves**
**F-92190 Meudon (FR)**

(74) Mandataire: **Rougemont, Bernard**
**Renault Technocentre**
**Département Propriété Intellectuelle**
**Sce 00267 TCR GRA 2 36**
**1 Avenue du Golf**
**78288 Guyancourt Cedex (FR)**

(56) Documents cités:
EP-A- 0 830 969          EP-A- 0 962 352
EP-A- 1 255 175          FR-A- 2 781 727
US-A1- 2003 060 948     US-B1- 6 258 006
US-B1- 6 470 983

**Description**

La présente invention concerne un procédé et un dispositif de commande d'un groupe motopropulseur avec des contrôles mécanique et électrique séparés. Le système concerné est un véhicule équipé d'un moteur thermique et d'une transmission infiniment variable fonctionnant en mode « tirage », en mode rétro, en mode rampage en couple et en mode rampage en vitesse.

En mode « tirage », le moteur thermique fournit un couple d'entraînement aux roues du véhicule. Un tel système ne comporte pas d'embrayage ni de convertisseur, entre le moteur thermique et les roues motrices du véhicule.

En mode « rétro », le conducteur ne fournit aucune intention sur la commande du moteur thermique.

En mode « rampage en couple », le conducteur ne fournit pas une intention sur la commande du moteur thermique.

En mode « rampage en vitesse », le conducteur ne fournit aucune intention sur la commande du moteur thermique ou sur le système de freinage.

Le groupe motopropulseur concerné ne comporte pas d'embrayage ni de convertisseur, entre le moteur thermique et les roues motrices du véhicule.

La transmission infiniment variable utilisée dans le système de l'invention est constituée :

- de deux machines électriques électriquement reliées par un élément tampon d'énergie et fonctionnant en variateur électrique ;
- d'une chaîne cinématique disposant de quatre arbres d'entrée/sortie respectivement connectés au moteur thermique, aux roues et aux machines électriques.

Des actionneurs permettent de contrôler l'état de fonctionnement essentiellement du moteur thermique et des deux machines électriques. Ces actionneurs doivent recevoir des signaux de pilotage produits par un superviseur, par exemple implémenté sur un ordinateur de bord.

Dans certains systèmes connus, on pilote de tels actionneurs à l'aide de plusieurs contrôleurs, par exemple :

- un premier contrôleur pour interpréter la volonté du conducteur,
- un second contrôleur pour déterminer un point de fonctionnement optimal du moteur thermique, et
- un troisième contrôleur pour produire des signaux de commande des actionneurs du groupe motopropulseur.

Dans la publication FR 2834249, on décrit une architecture à trois couches pour un superviseur de groupe motopropulseur qui permet de rendre le superviseur peu dépendant du type de moteur thermique, des caractéristiques de la transmission infiniment variable et des caractéristiques, tant du comportement routier du véhicule que du style de conduite du conducteur.

Dans une première couche, le superviseur comporte un premier moyen pour interpréter la volonté du conducteur tout en tenant compte de l'environnement de conduite du véhicule.

Dans un seconde couche, le superviseur comporte un second moyen qui coopère avec le premier moyen pour déterminer, indépendamment du type de moteur thermique, le point optimal de fonctionnement du groupe motopropulseur pour appliquer une consigne déterminée en fonction de l'interprétation de la volonté du conducteur.

Dans une troisième couche, le superviseur comporte un troisième moyen qui coopère avec le second moyen pour déterminer les signaux de commande des actionneurs d'un groupe motopropulseur avec une transmission infiniment variable du type décrit plus haut.

Un premier objet de la présente invention est de permettre, au niveau de la troisième couche du superviseur, de calculer la commande des trois actionneurs disponibles - le moteur thermique et les deux machines électriques - permettant de réaliser le point de fonctionnement requis par les couches supérieures de supervision dans le mode « tirage » ; un second objet est de réaliser ce point de fonctionnement en mode rétro ; un troisième, de le réaliser en mode rampage en couple, et un quatrième en mode rampage en vitesses.

Ce objet est atteint, selon l'invention grâce à une commande telle que définie dans la revendication 1 ou 19.

L'invention concerne un procédé de commande d'un groupe motopropulseur de véhicule comportant un moteur thermique couplé directement aux roues du véhicule et une transmission infiniment variable à variateur électrique incluant deux machines électriques, selon lequel le véhicule peut être entraîné par le groupe motopropulseur, freiné par celui-ci, découplé de celui-ci ou maintenu à l'arrêt. Elle n'interpose aucun coupleur séparatif entre le moteur thermique et les roues du véhicule.

En mode tirage, le procédé consiste :

- dans une première étape à calculer le couple du moteur thermique Tice# et, en régulant simultanément le couple aux roues et le régime du moteur thermique, à produire un signal de commande mécanique u0 représentatif de caractéristiques mécaniques estimées ; puis

- dans une seconde étape à calculer les couples Te1# ; Te2# des première et seconde machines électriques sur la base dudit signal de commande mécanique et à produire un signal de commande énergétique régulant le niveau d'énergie ;

en exploitant uniquement une mesure du niveau de charge de l'élément tampon d'énergie électrique Ucapa et des mesures de régime $\omega_{e1}$, $\omega_{e2}$ et $T_{e1}$, $T_{e2}$ de couple fournies par les machines électriques $M_{e1}$, $M_{e2}$.

En mode rétro, le procédé consiste :

- dans une première étape, en régulant le régime du moteur thermique, à produire un signal de commande mécanique représentatif de caractéristiques mécaniques estimées ; puis
- dans une seconde étape à calculer les couples des première et seconde machines électriques sur la base dudit signal de commande mécanique et à produire un signal de commande énergétique régulant le niveau d'énergie ;

en exploitant uniquement une mesure du niveau de charge de l'élément tampon d'énergie électrique et des mesures de régime et de couple fournies par les machines électriques.

En mode rampage en couple, le procédé consiste :

- dans une première étape, en régulant le couple aux roues, à produire un signal de commande mécanique représentatif de caractéristiques mécaniques estimées ; puis
- dans une seconde étape à calculer les couples des première et seconde machines électriques sur la base dudit signal de commande mécanique et à produire un signal de commande énergétique régulant le niveau d'énergie ;

en exploitant uniquement une mesure du niveau de charge de l'élément tampon d'énergie électrique et des mesures de régime et de couple fournies par les machines électriques.

En mode rampage en vitesse, le procédé consiste :

- dans une première étape, en régulant la vitesse de rotation aux roues, à produire un signal de commande mécanique représentatif de caractéristiques mécaniques estimées ; puis
- dans une seconde étape à calculer les couples des première et seconde machines électriques sur la base dudit signal de commande mécanique et à produire un signal de commande énergétique régulant le niveau d'énergie ;

en exploitant uniquement une mesure du niveau de charge de l'élément tampon d'énergie électrique et des mesures de régime et de couple fournies par les machines électriques.

D'autres caractéristiques et avantages de la présente invention seront mieux compris à l'aide de la description et des figures annexées dans lesquelles :

- la figure 1 est une vue schématique représentant les éléments principaux d'un véhicule dans lequel sont implémentés le procédé et le dispositif de l'invention ;
- la figure 2 est un organigramme du procédé de l'invention ;
- les figures 3 à 6 sont des vues schématiques représentant des blocs fonctionnels du dispositif de l'invention.
- les figures 7 à 12 illustrent le mode rétro
- les figures 13 à 18 illustrent le mode rampage en couple
- les figures 14 à 24 illustrent le mode rampage en vitesse

Dans la suite du texte, les notations suivantes ont la signification suivante :

- Le terme â ou ^a désigne une estimation de la variable a ;
- Le terme a* ou le terme a$^*$ désigne une consigne optimisée de la variable a ;
- Le terme a# ou le terme a$^{\#}$ désigne une consigne calculée de la variable a ;
- Le terme $\dot{a}$ ou le terme a' désigne la variation temporelle de la variable a ;
- Dans les figures, les lignes épaisses désignent des signaux de type vecteur ;
- Dans les équations, l'expression « A . B » désigne le produit matriciel des matrices ou vecteurs A et B ;
- La variable Ts désigne le temps d'échantillonnage de la commande ;

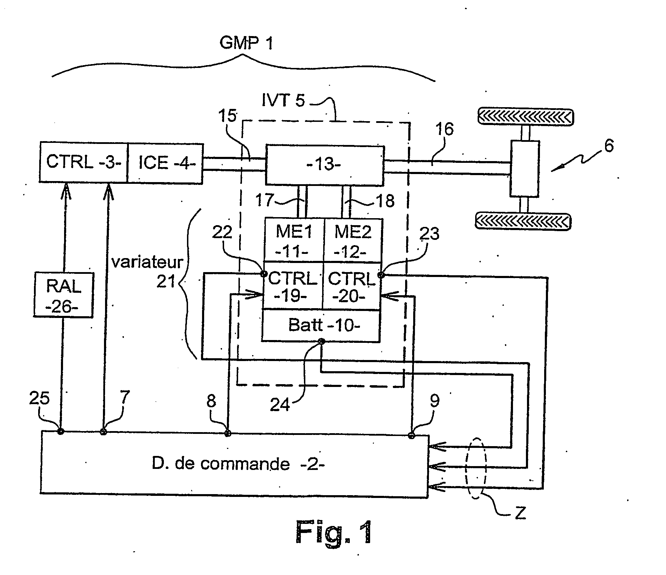

A la Figure 1, on a représenté un schéma bloc d'un véhicule équipé d'un groupe motopropulseur (GMP). Le groupe motopropulseur GMP est constitué d'un moteur thermique ($_{ICE}$) 4 commandé en couple et d'une transmission infiniment variable (IVT) 5. Cette transmission est constituée d'une chaîne cinématique 13 comportant quatre voies d'échange de puissance mécanique et d'un variateur électrique 21. Le variateur électrique 21 est lui-même constitué de deux machines électriques $M_{e1}$, 11 et $M_{e2}$, 12 commandées en couple et liées électriquement par un élément tampon d'énergie 10. Bien que l'élément de stockage d'énergie 10 du mode de réalisation décrit soit un condensateur, le procédé de commande est également applicable au cas d'une transmission infiniment variable avec un stockage d'énergie de technologie différente telle qu'une batterie ou un super condensateur.

Chaque machine électrique $M_{e1}$, 11 ou $M_{e2}$, 12 peut travailler dans les quatre quadrants de caractéristique $(\omega_e, T_e)$, ou autrement dit :

- comme moteur, mode dans lequel la machine électrique tire de l'énergie électrique sur l'élément tampon d'énergie 10 et délivre de la puissance mécanique par un arbre 17 ou 18 sur la chaîne cinématique à quatre voies, ou
- comme générateur, mode dans lequel la machine électrique prélève de la puissance mécanique sur la chaîne cinématique 13 et recycle de l'énergie électrique vers l'élément tampon d'énergie 10.

La chaîne cinématique 13 comporte quatre arbres d'échange de puissance mécanique qui sont :

- Un arbre 15 pour échanger de la puissance mécanique avec le vilebrequin du moteur thermique 4 qui peut travailler en moteur ou en frein moteur ;
- Un arbre 16 pour échanger de la puissance mécanique avec les roues 6 du véhicule ;
- Des arbres 17 et 18 pour échanger de la puissance mécanique avec les rotors des deux machines électriques 11 et 12.

Le moteur thermique 4 est contrôlé en couple par un contrôleur 3 et les machines électriques 11 et 12 sont respectivement contrôlées par un contrôleur 19 et par un contrôleur 20. La chaîne cinématique 13 de la transmission IVT 5 comporte ainsi qu'il est connu des coupleurs comme des embrayages et des freins qui sont commandés par un contrôleur de mode de transmission qui n'est ni décrit ni représenté dans la présente demande mais qui est défini dans les précédentes demandes de brevet précitées du demandeur.

En mode tirage ou Torque Tracking (TT), le moteur thermique fournit un couple positif à la transmission (tirage). Au cours de ce mode, les objectifs mécaniques poursuivis par le procédé de l'invention sont la régulation du régime du moteur thermique et du couple fourni aux roues. L'objectif énergétique poursuivi par le procédé de l'invention est la régulation de la tension du condensateur.

Dans la suite de la description, on exploitera les grandeurs désignées par les notations :

- $\omega_{e1}$ : régime de la première machine électrique 11,
- $\omega_{e2}$ : régime de la seconde machine électrique 12,
- $Td_{e1}$ : couple de perturbation appliqué sur le couple fourni par la première machine électrique $M_{e1}$ 11,
- $Td_{e2}$ : couple de perturbation appliqué sur le couple fourni par la seconde machine électrique $M_{e2}$ 12,
- $T_{e1}\#$ : consigne de couple pour la première machine électrique $M_{e1}$ 11,
- $T_{e2}\#$ : consigne de couple pour la seconde machine électrique $M_{e2}$ 12,
- $\omega_{ice}$ : régime du moteur thermique ice 4,
- $T_{ice}$ : couple du moteur thermique ice appliqué sur le vilebrequin 8,
- $Td_{ice}$ : couple de perturbation appliqué sur le vilebrequin du moteur thermique 4,
- $T_{ice}\#$ : consigne de couple pour le moteur thermique 4,
- To: couple appliqué aux roues par le groupe motopropulseur GMP,
- $T_{dwh}$ : couple de perturbation appliqué sur le couple aux roues,
- W : niveau d'énergie du condensateur,
- $\varphi(T_{e1}, T_{e2}, \omega_{e1}, \omega_{e2})$ : cette fonction scalaire est définie par la puissance échangée par le condensateur 10 avec les machines électriques, ainsi que l'ensemble des pertes du variateur électrique comprenant les deux machines électriques $M_{e1}$ et $M_{e2}$ et leur condensateur de stockage,
- PdW : puissance de perturbation appliquée sur la dynamique du condensateur.

Les variables décrivant l'état du système sont divisées en deux listes unidimensionnelles ou vecteurs X1 et X2, ici représentées sous leur forme vectorielle transposée :

$$X1 = [\omega_{e1}, \omega_{e1}, T_{ice}, T_{dwh}, Td_{ice}, Td_{e1}, Td_{e2}] \qquad (8)$$

$$X2 = [W, PdW] \qquad\qquad (9)$$

Le vecteur d'état X1 comporte :

- des valeurs de régime du variateur électrique ;
- des valeurs de couple moteur thermique ;
- des valeurs de perturbation des signaux de couple.

Le vecteur d'état X2 comporte :

- au moins une valeur décrivant l'état énergétique de l'élément tampon d'énergie dans le variateur de vitesses ;
- au moins une valeur de perturbation de cet état énergétique.

Le dispositif de commande 2 de l'invention reçoit un entrée un vecteur V de trois groupes de paramètres d'état du variateur électrique 21 qui sont :

- l'état de puissance électrique ($T_{e1}$, $\omega_{e1}$) de la machine électrique $M_{e1}$ 11 par une ligne 22 issue du contrôleur 19 ;
- l'état de puissance électrique ($T_{e2}$, $\omega_{e2}$) de la machine électrique $M_{e2}$ 12 par une ligne 23 issue du contrôleur 20 ;
- l'état de charge électrique (Ucapa) de l'élément tampon d'énergie 10.

En réponse, et en appliquant le procédé de l'invention, le dispositif de commande 2 retourne des signaux de contrôle pour les actionneurs du groupe motopropulseur 1, à savoir :

- un signal de contrôle émis par une ligne 7 à destination du contrôleur 3 du moteur thermique 4 qui permet de contribuer à l'objectif de régulation sur le régime du moteur thermique ;
- un signal de contrôle émis par des lignes 8 et 9 à destination des contrôleurs du variateur électrique 21 qui permet d'atteindre simultanément l'objectif de régulation sur le régime du moteur thermique et un objectif de régulation de couple à la roue To.

Dans un mode préféré de réalisation, le signal de contrôle émis par une ligne 7 est un signal de commande de couple $T_{ice}$# du moteur thermique.

Dans un mode préféré de réalisation, le signal de contrôle émis par des lignes 8 et 9 est une paire de signaux de commande de couple $T_{e1}$# et $T_{e2}$# respectivement transmis à des entrées convenables des contrôleurs 19 et 20 des machines électriques $M_{e1}$ 11 et $M_{e2}$ 12.

Le procédé de l'invention est basé sur la structure de commande multivariable à trois consignes présentée dans la publication FR 2834249. L'objet de la présente invention est de construire la couche intermédiaire de commande (COS) dans le mode « tirage » au cours duquel le moteur thermique est commandé par les deux couches supérieures, sans être découplé de la transmission infiniment variable.

Le superviseur ou contrôleur qui exécute l'optimisation du point de fonctionnement du moteur thermique fournit à l'entrée du contrôleur de troisième couche une consigne de régime du moteur thermique. Le superviseur ou contrôleur fournit également une consigne de couple aux roues. On dispose par ailleurs d'une consigne de tension du condensateur qui sert le plus souvent d'élément tampon d'énergie pour le variateur électrique. A partir de ces trois consignes et des mesures disponibles décrivant l'environnement du véhicule, comme la vitesse du véhicule ou la pente dans laquelle il est engagé, le contrôleur génère les consignes de couple pour les trois principaux actionneurs du GMP, à savoir les deux machines électriques (Me1 et Me2) et le moteur thermique.

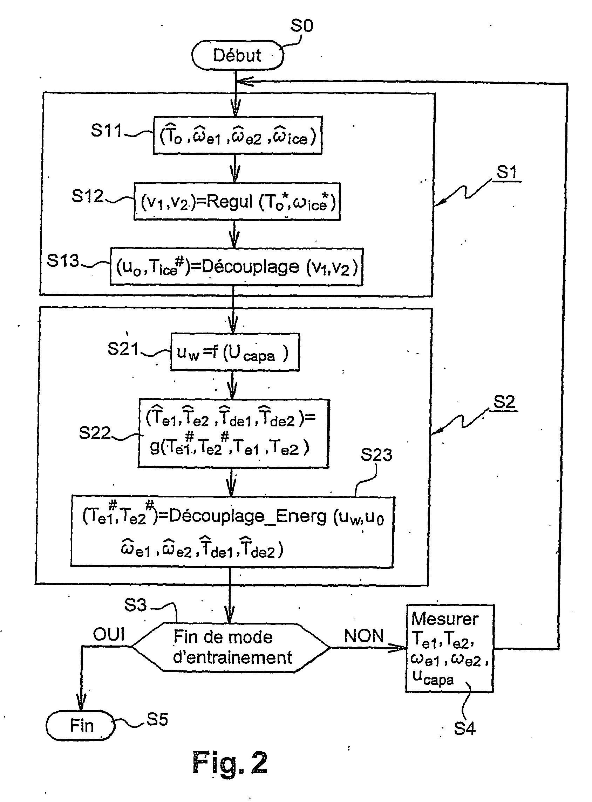

A la figure 2, on a représenté la séquence des opérations principales effectuées par le procédé de commande de l'invention.

Après une opération de début de commande lors d'une étape S0 au cours de laquelle le dispositif de commande de l'invention est configuré puis initialisé, et ultérieurement uniquement initialisé sauf lors d'opérations de maintenance, le contrôle passe à une étape S1 au cours de laquelle un signal de commande mécanique uo, ainsi que la consigne de couple du moteur thermique $T_{ice}$# sont calculés sur la base d'un vecteur de mesure Z.

Selon une caractéristique de l'invention, le vecteur de mesure Z est composé de la mesure des couples fournis par les deux machines électriques Te1, Te2, de leurs régimes $\omega$e1, $\omega$e2 ainsi que de la tension Ucapa aux bornes de l'élément de stockage d'énergie.

Préférentiellement, cependant, la valeur de tension Ucapa aux bornes de l'élément tampon d'énergie électrique n'est pas exploitée lors de l'étape S1. L'étape S1 se caractérise par le fait que seul l'objectif de régulation mécanique est pris en compte et la commande qui en découle du moteur thermique est alors directement disponible et peut être appliquée aux actionneurs du moteur thermique.

Dans la première étape, le procédé de l'invention consiste à produire un signal intermédiaire de commande $u_0$ et un signal représentatif de la consigne de couple $T_{ice}^{\#}$ du moteur thermique. Pour effectuer cette étape de contrôle mécanique, le procédé de l'invention consiste à tenir compte des estimations des couples des machines électriques du variateur, ainsi que de la valeur précédente du signal de commande mécanique estimée au pas précédent de calcul ainsi que d'un signal de commande énergétique $u_w$.

Puis, dans une seconde étape S2, le procédé de l'invention consiste à produire un signal de commande énergétique $u_w$, une correction du signal de commande mécanique $u_0(n)$, des estimations des couples des machines électriques du variateur $^\wedge T_{e1}$ et $^\wedge T_{e2}$ ainsi que des signaux de consigne des couples des machines électriques $T_{e1}^{\#}$ et $T_{e2}^{\#}$ qui seront réellement appliqués aux contrôleurs 14 et 15. Pour effectuer cette étape de contrôle énergétique, le procédé de l'invention consiste à tenir compte, en plus des signaux de mesure des grandeurs mesurées dans le vecteur Z (Figure 1) des capteurs du système, du signal intermédiaire de commande $u_0$, calculé lors de l'étape de contrôle mécanique précédente.

Lors d'une étape S3, on réalise un test de fin de boucle pour déterminer si le contrôle de l'invention se termine lorsqu'une décision de fin de mode d'entraînement en mode « tirage » a été prise.

Si le test est « OUI », une étape de Fin S5 est exécutée pour relâcher le contrôle.

Si le test S3 est « NON », le contrôle reste dans la boucle et une nouvelle mise à jour (étape S4) du vecteur de mesure Z = (Te1, Te2, ωe1, ωe2, Ucapa) est effectuée et le contrôle reprend le début de la boucle à l'étapeS1.

Dans un mode préféré de réalisation, l'étape S1 est subdivisée en trois étapes successives qui sont :

- une étape S11 au cours de laquelle on acquiert les estimations du couple de sortie du groupe motopropulseur $^\wedge$To, des régimes des deux machines électriques soit $^\wedge$ωe1 et $^\wedge$ωe2, et du moteur thermique, soit $^\wedge$ωice ;
- une étape S12 de production d'un couple de valeurs (v1, v2) qui sont obtenues en appliquant une fonction de régulation prédéterminée, qui peut être réalisée à l'aide des fonctions de régulation disponibles dans l'état de la technique selon une relation de la forme : (v1, v2) = Regul(To*, ωice*), qui dépend des valeurs mesurées du couple de sortie To# et du régime moteur ωice# ;
- une étape S13 de production d'un couple de valeurs (u0, Tice#) qui sont obtenues en appliquant une fonction de découplage prédéterminée, qui peut être réalisée à l'aide des fonctions de découplage disponibles dans l'état de la technique selon une relation de la forme : (u0, Tice#) = Découplage (v1, v2) qui dépend du couple de valeurs calculées à l'étape S12.

Dans un mode préféré de réalisation, l'étape S2 est subdivisée en trois étapes successives qui sont :

- une étape S21 de production d'un signal intermédiaire de commande énergétique $u_w$ sur la base d'une fonction prédéterminée f() enregistrée ou programmée au préalable et qui dépend de la tension mesurée aux bornes de l'élément tampon d'énergie selon une relation de la forme uw = f(Ucapa) ;
- une étape S22 au cours de laquelle un vecteur d'estimation des couples positifs ou négatifs présents sur les arbres de rotation des deux machines électriques ainsi qu'une estimation de leurs perturbations est déterminée sur la base d'une fonction prédéterminée g() enregistrée ou programmée au préalable et qui dépend des consignes et des valeurs mesurées de couples des machines électriques selon une relation de la forme ($^\wedge$Te1, $^\wedge$Te2, $^\wedge$Tde1, $^\wedge$Tde2) = g(Te1#, Te2#, Te1, Te2) ;
- une étape S23 au cours de laquelle un vecteur de valeurs de consigne des couples des machines électriques du variateur est calculé sur la base d'une fonction prédéterminée Découplage_Energ() enregistrée ou programmée au préalable qui réalise la fonction connue de l'homme de métier de découplage mais qui l'exécute seulement dans l'objectif de régulation énergétique à la différence de la fonction Découplage() de l'étape S13, et qui dépend du signal de commande énergétique $u_w$ calculé lors de l'étape S21, du signal de commande mécanique $u_0$, calculé lors de l'étape précédente S13, et des estimations des régimes et des perturbations de couples des deux machines électriques du variateur selon une relation de la forme : (Te1#, Te2#) = Decouplage_Energ(uw, u0, $^\wedge$ωe1, $^\wedge$ωe2, $^\wedge$Tde1, $^\wedge$Tde2).

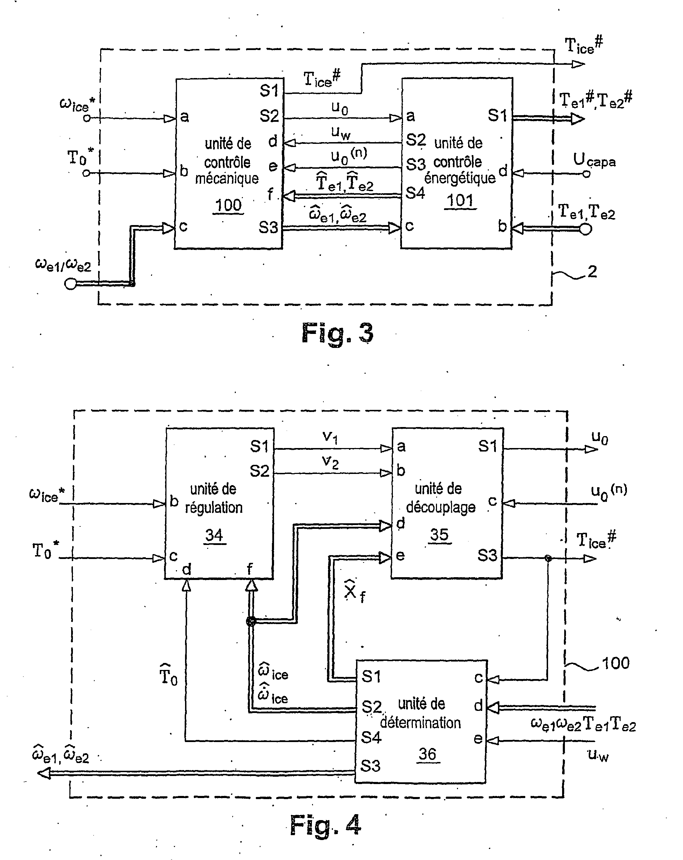

Le contrôleur de troisième niveau, partie du dispositif de commande 2 (voir figure 1) et qui est représenté à la figure 3, comporte :

- une unité de contrôle mécanique 100 ;
- une unité de contrôle énergétique 101.

L'unité de contrôle mécanique 100 comporte six portes d'entrée qui sont respectivement :

- une porte a qui reçoit une valeur indicatrice du régime moteur optimal $\omega_{ice}{}^*$ ;
- une porte b qui reçoit une valeur indicatrice du couple moteur optimal To* ;
- une porte c qui reçoit la mesure des vitesses de rotation des machines électriques $\omega_{e1}$ et $\omega_{e2}$ ;
- une porte d connectée à l'unité de contrôle énergétique 101 pour recevoir le signal de commande énergétique $u_w$,
- une porte e connectée à l'unité de contrôle énergétique 101 pour recevoir une valeur précédente du signal de commande mécanique u0(n) ;
- une porte f connectée à l'unité de contrôle énergétique 101 pour recevoir les estimations des couples des machines électriques $^\wedge T_{e1}$ et $^\wedge T_{e2}$.

L'unité de contrôle mécanique 100 comporte trois portes de sortie qui sont respectivement :

- une porte S1 qui est fournit la consigne de couple du moteur thermique $T_{ice}{}^\#$ ;
- une porte S2 pour fournir le signal de commande mécanique $u_0$ à destination de l'unité de contrôle énergétique 101 ;
- une porte S3 qui fournit les estimations des régimes des deux machines électriques $^\wedge\omega e1$ et $^\wedge\omega e2$ à destination de l'unité de contrôle énergétique 101.

L'unité de contrôle énergétique 101 comporte quatre portes d'entrée qui sont respectivement :

- une porte a connectée à la sortie S2 de l'unité de contrôle mécanique 100 ;
- une porte b connectée qui reçoit la mesure des couples des machines électriques $T_{e1}$ et $Te_2$ ;
- une porte c connectée à la sortie S3 de l'unité de contrôle mécanique 100 pour recevoir les estimations des régimes des machines électriques $^\wedge\omega_{e1}$ et $^\wedge\omega_{e2}$ ;
- une porte d qui reçoit la mesure de la tension aux bornes de l'élément tampon d'énergie du variateur électrique de la transmission.

L'unité de contrôle énergétique 101 comporte quatre portes de sortie qui sont respectivement :

- une porte S1 qui fournit les consignes de couple des machines électriques $T_{e1}{}^\#$ et $T_{e2}{}^\#$;
- une porte S2 connectée à la porte d'entrée d de l'unité de contrôle mécanique 100 pour lui fournir le signal de commande énergétique $u_w$ ;
- une porte S3 connectée à la porte d'entrée e de l'unité de contrôle mécanique 100 pour lui fournir une correction du signal de commande mécanique $u_0$ ;
- une porte S4 connectée à la porte d'entrée f de l'unité de contrôle mécanique 100 pour lui fournir une estimation des valeurs de couple des machines électriques $^\wedge T_{e1}$ et $^\wedge T_{e2}$.

A la Figure 4, on a représenté un mode particulier de réalisation des principales unités composant l'unité de contrôle mécanique 100 qui sont :

- une unité de détermination 36 des variables décrivant l'état du système,
- une unité de régulation 34, et
- une unité de découplage 35.

Le paramétrage de ces unités repose sur un modèle de comportement du véhicule, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités, tels que décrits à l'aide des figures 1 et 2.
L'unité de régulation 34 comporte quatre portes d'entrée :

- Une porte d'entrée b recevant un signal représentatif de la valeur optimale du régime moteur thermique $\omega_{ice}{}^*$ ;
- Une porte d'entrée c recevant un signal représentatif de la valeur optimale de couple aux roues To* ;
- Une porte d'entrée d recevant un signal représentatif d'une estimation de la valeur de couple aux roues $^\wedge To$ ;
- Une porte d'entrée f recevant un signal d'estimation du régime moteur $^\wedge\omega_{ice}$ et le cas échéant de sa dérivée temporelle $^\wedge\omega_{ice}{}'$.

L'unité de régulation 34 comporte deux portes de sortie qui sont respectivement :

- Une porte de sortie S1 de signal de commande intermédiaire v1 ;
- Une porte de sortie S2 de signal de commande intermédiaire v2.

L'unité de régulation 34 comporte un processeur ou partie de processeur affectée à l'exécution à chaque pas de calcul d'une nouvelle actualisation du vecteur (v1, v2) décrit à l'étape S12 qui comporte deux unités de calcul respectivement du premier signal de commande intermédiaire v1 et du second signal de commande intermédiaire v2.

L'unité de découplage 35 comporte cinq portes d'entrée :

- Une porte d'entrée a recevant le signal de commande intermédiaire v1 issu de la sortie S1 de l'unité de régulation 34 ;
- Une porte d'entrée b recevant le signal de commande intermédiaire v2 issu de la sortie S2 de l'unité de régulation 34 ;
- Une porte d'entrée c recevant la correction du signal de commande mécanique $u_0(n)$ ;
- Une porte d'entrée d recevant un signal d'estimation du régime moteur $^\wedge\omega_{ice}$ et le cas échéant de sa dérivée $^\wedge\omega ice'$ ;
- une porte d'entrée e recevant un signal d'estimation $^\wedge Xf$ d'un vecteur $X_f$.

L'unité de découplage 35 comporte deux portes de sortie qui sont respectivement :

- une porte de sortie S1 qui fournit un signal de commande mécanique $u_0$ ;
- une porte de sortie S3 qui fournit un signal représentatif de la consigne de couple moteur $T_{ice}{}^\#$ et qui est directement transmise par la ligne 7 (Figure 1) aux actionneurs 3 du moteur thermique 4. Cette valeur de commande respecte l'ensemble des données de régulation et d'optimisation du point de fonctionnement avec une séparation des objectifs mécanique et énergétique.

L'unité de détermination 36 de l'estimation $^\wedge Xf$ a pour rôle de construire le signal d'estimation $^\wedge Xf$ contenant les principales variables décrivant l'état du système.

L'unité de détermination 36 comporte trois portes d'entrée :

- Une porte d'entrée c recevant le signal de consigne de couple du moteur thermique $T_{ice}{}^\#$ ;
- Une porte d'entrée d recevant un vecteur caractérisant l'état électrique des machines électriques $\omega_{e1}$, $\omega_{e2}$, $T_{e1}$, $T_{e2}$ ;
- Une porte d'entrée e recevant un signal de commande énergétique $u_w$.

L'unité de détermination 36 comporte quatre portes de sortie qui sont :

- Une porte de sortie S1 qui produit un signal d'estimation sous forme d'un vecteur $^\wedge Xf$ transmis à la porte d'entrée e de l'unité de découplage 35 ;
- Une porte de sortie S2 qui produit un couple de valeurs d'estimation du régime moteur $^\wedge\omega_{ice}$, et de sa dérivée temporelle $^\wedge\omega_{ice}'$ transmis à la porte d'entrée f de l'unité de régulation 34 ;
- Une porte de sortie S4 qui produit une valeur d'estimation du couple à la roue $^\wedge To$ ;
- Une porte de sortie S3 qui produit des valeurs d'estimation des régimes des deux machines électriques.

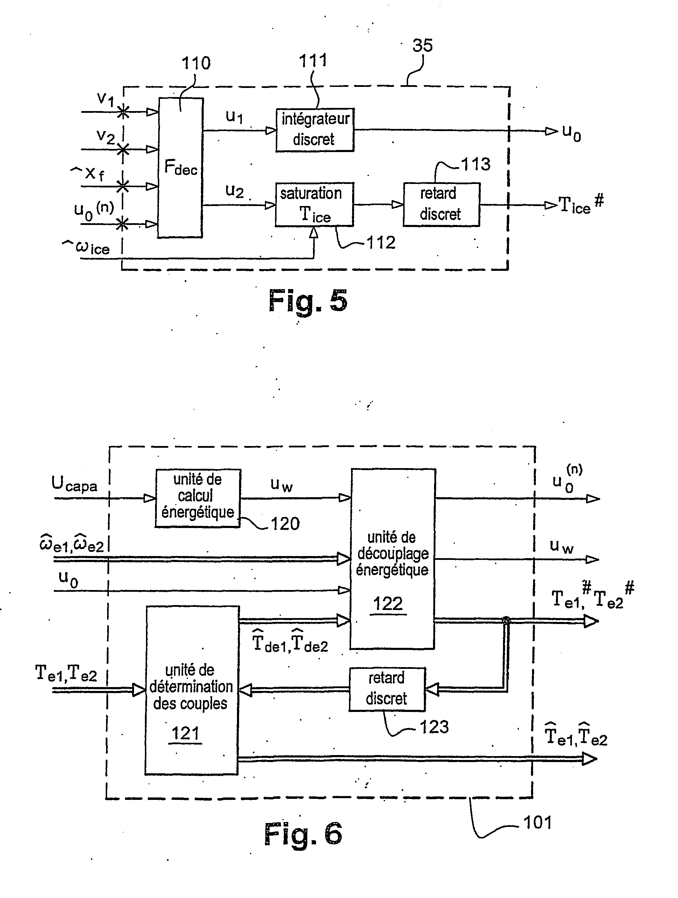

A la figure 5, on a représenté un mode particulier de réalisation d'un circuit permettant de réaliser le calcul du signal de commande mécanique $u_0$ et de la consigne de couple du moteur thermique $T_{ice}{}^\#$.

Le circuit 35 de découplage de la commande mécanique comporte un premier circuit 110 qui exécute l'opération d'inversion du modèle par dérivations successives. Le circuit 110 reçoit quatre paramètres d'entrée qui sont respectivement :

- les signaux de commande intermédiaire v1 et v2 ;
- l'estimation $^\wedge Xf$ du vecteur Xf ;
- la valeur antérieure du signal de commande mécanique $u_0(n)$.

Le circuit 110 produit de la manière qui a été rappelée ci-dessus deux signaux intermédiaires de commande u1 et u2 qui sont respectivement fournis à l'entrée d'un circuit intégrateur discret 111 pour produire le signal de commande mécanique $u_0$ et à un circuit 112 de saturation du couple moteur thermique dépendant du régime moteur thermique.

Le signal de sortie du circuit 112 est fourni ensuite à l'entrée d'un circuit 113 qui applique un retard discret prédéterminé et produit la consigne de couple moteur thermique $T_{ice}{}^\#$.

À la figure 6, on a représenté un mode particulier de réalisation d'une unité de contrôle énergétique 101 telle qu'elle est représentée à la figure 3.

Le procédé de l'invention, ainsi qu'il a été défini ci-dessus, comporte une étape de calcul d'un signal de commande énergétique $u_w$ qui s'exécute en trois étapes successives.

Dans une première étape, une unité de calcul énergétique 120 produit une première estimation du signal de commande énergétique $u_w$ sur la base de la tension mesurée aux bornes de l'élément tampon d'énergie Ucapa.

Dans une seconde étape 121, on estime les couples $T_{e1}$ et $T_{e2}$ des machines électriques et leurs perturbations.

Dans une troisième étape 122, qui doit être réalisé après l'exécution des première et seconde étapes 120 et 121, le procédé de l'invention consiste à réaliser un découplage énergétique. Le découplage énergétique est effectué par un algorithme déterminé sur la base de la première estimation du signal de commande énergétique $u_w$ produite lors de l'étape 120, des estimations des perturbations $^\wedge T_{de1}$ et $^\wedge T_{de2}$ des couples des machines électriques, des estimations des vitesses de rotation des machines électriques et du signal de commande mécanique. L'opération de découplage énergétique produit en sortie :

-    un signal de commande mécanique corrigé $u_0$ ;
-    un signal de commande énergétique $u_w$ ;
-    des consignes de couple des machines électriques $T_{e1}^\#$, $T_{e2}^\#$.

L'unité de découplage énergétique 122 comporte un moyen pour produire un vecteur de commande des couples des machines électriques tout en assurant l'absence de perturbation du contrôle énergétique par le contrôle mécanique. Ce moyen d'isolement des contrôles mécanique et énergétique est réalisé par une unité de calcul de la relation :

$$Te^\# = AA \cdot u - {}^\wedge Tde$$

dans laquelle :

$Te^\#$ est un vecteur qui rassemble les deux consignes de couple des machines électriques représenté par $\begin{bmatrix} T_{e1}^\# \\ T_{e2}^\# \end{bmatrix}$ ;

AA est une matrice carrée qui est représentée par : $\begin{bmatrix} -\dfrac{\omega_{e1}}{\omega_{e1}^2 + \omega_{e2}^2} & -\dfrac{\omega_{e2}}{\Omega} \\ -\dfrac{\omega_{e2}}{\omega_{e1}^2 + \omega_{e2}^2} & \dfrac{\omega_{e1}}{\Omega} \end{bmatrix}$ matrice dans laquelle $\Omega$ est un

paramètre de réglage obtenue par essais sur véhicule ;

u est un vecteur qui rassemble les deux signaux de consigne mécanique et énergétique représenté par : $\begin{bmatrix} u_w \\ u_0 \end{bmatrix}$ ;

Tde est un vecteur qui rassemble les deux estimations des variations de couple des machines électriques, représenté

par : $\begin{bmatrix} \hat{T}_{de1} \\ \hat{T}_{de2} \end{bmatrix}$ .

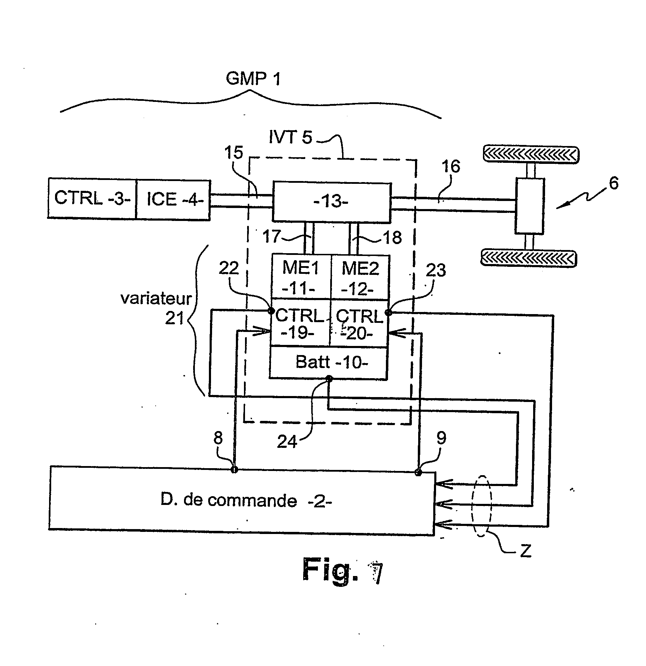

A la Figure 7, illustrant le mode rétro, on a représenté un schéma bloc d'un véhicule équipé d'un groupe motopropulseur (GMP). Le groupe motopropulseur GMP est constitué d'un moteur thermique (ICE) 4 commandé en couple et d'une transmission infiniment variable (IVT) 5. Cette transmission est constituée d'une chaîne cinématique 13 comportant quatre voies d'échange de puissance mécanique et d'un variateur électrique 21. Le variateur électrique 21 est lui-même constitué de deux machines électriques $M_{e1}$, 11 et $M_{e2}$, 12 commandées en couple et liées électriquement par un élément tampon d'énergie 10. Bien que l'élément de stockage d'énergie 10 du mode de réalisation décrit soit un condensateur, le procédé de commande est également applicable au cas d'une transmission infiniment variable avec un stockage d'énergie de technologie différente telle qu'une batterie ou un super condensateur.
Chaque machine électrique $M_{e1}$, 11 ou $M_{e2}$, 12 peut travailler dans les quatre quadrants de caractéristique ($\omega_e$, $T_e$), ou autrement dit :

-    comme moteur, mode dans lequel la machine électrique tire de l'énergie électrique sur l'élément tampon d'énergie 10 et délivre de la puissance mécanique par un arbre 17 ou 18 sur la chaîne cinématique à quatre voies, ou
-    comme générateur, mode dans lequel la machine électrique prélève de la puissance mécanique sur la chaîne cinématique 13 et recycle de l'énergie électrique vers l'élément tampon d'énergie 10.

La chaîne cinématique 13 comporte quatre arbres d'échange de puissance mécanique qui sont :

- Un arbre 15 pour échanger de la puissance mécanique avec le vilebrequin du moteur thermique 4 qui peut travailler en moteur ou en frein moteur ;
- Un arbre 16 pour échanger de la puissance mécanique avec les roues 6 du véhicule ;
- Des arbres 17 et 18 pour échanger de la puissance mécanique avec les rotors des deux machines électriques 11 et 12.

Le moteur thermique 4 est contrôlé en couple par un contrôleur 3 et les machines électriques 11 et 12 sont respectivement contrôlées par un contrôleur 19 et par un contrôleur 20. La chaîne cinématique 13 de la transmission IVT 5 comporte ainsi qu'il est connu des coupleurs comme des embrayages et des freins qui sont commandés par un contrôleur de mode de transmission.

Le mode de fonctionnement du groupe motopropulseur GMP concerné par la figure 7 est un mode d'entraînement appelé « rétro » au cours duquel le moteur thermique fournit un couple résistant à la transmission. Au cours de ce mode, le seul objectif mécanique poursuivi par le procédé de l'invention est la régulation du régime du moteur thermique. L'objectif énergétique poursuivi par le procédé de l'invention est la régulation de la tension du condensateur.

Dans la suite de la description, on exploitera les grandeurs désignées par les notations :

- $\omega_{e1}$ : régime de la première machine électrique 11,
- $\omega_{e2}$ : régime de la seconde machine électrique 12,
- $Td_{e1}$ : couple de perturbation appliqué sur le couple fourni par la première machine électrique $M_{e1}$ 11,
- $Td_{e2}$ : couple de perturbation appliqué sur le couple fourni par la seconde machine électrique $M_{e2}$ 12,
- $T_{e1}\#$ : consigne de couple pour la première machine électrique $M_{e1}$ 11,
- $T_{e2}\#$ : consigne de couple pour la seconde machine électrique $M_{e2}$ 12,
- $\omega_{ice}$ : régime du moteur thermique $_{ice}$ 4,
- $T_{ice}$ : couple du moteur thermique $_{ice}$ appliqué sur le vilebrequin 8,
- $Td_{ice}$ : couple de perturbation appliqué sur le vilebrequin du moteur thermique 4,
- $T_{ice}\#$ : consigne de couple pour le moteur thermique 4,
- To: couple appliqué aux roues par le groupe motopropulseur GMP,
- $T_{dwh}$ : couple de perturbation appliqué sur le couple aux roues,
- W : niveau d'énergie du condensateur,
- $\varphi(T_{e1}, T_{e2}, \omega_{e1}, \omega_{e2})$ : cette fonction scalaire est définie par la puissance échangée par le condensateur 10 avec les machines électriques, ainsi que l'ensemble des pertes du variateur électrique comprenant les deux machines électriques $M_{e1}$ et $M_{e2}$ et leur condensateur de stockage,
- PdW : puissance de perturbation appliquée sur la dynamique du condensateur.

Les variables décrivant l'état du système sont divisées en deux listes unidimensionnelles ou vecteurs X1 et X2, ici représentées sous leur forme vectorielle transposée :

$$X1 = [\omega_{e1}, \omega_{e1}, T_{Ice}, T_{dwh}, Td_{Ice}, Td_{e1}, Td_{e2}] \qquad (8)$$

$$X2 = [W, PdW] \qquad (9)$$

Le vecteur d'état X1 comporte :

- des valeurs de régime du variateur électrique ;
- des valeurs de couple moteur thermique ;
- des valeurs de perturbation des signaux de couple.

Le vecteur d'état X2 comporte :

- au moins une valeur décrivant l'état énergétique de l'élément tampon d'énergie dans le variateur de vitesses ;

- au moins une valeur de perturbation de cet état énergétique.

Le dispositif de commande 2 de l'invention reçoit en entrée un vecteur V de trois groupes de paramètres d'état du variateur électrique 21 qui sont :

- l'état de puissance électrique ($T_{e1}$, $\omega_{e1}$) de la machine électrique $M_{e1}$ 11 par une ligne 22 issue du contrôleur 19 ;
- l'état de puissance électrique ($T_{e2}$, $\omega_{e2}$) de la machine électrique $M_{e2}$ 12 par une ligne 23 issue du contrôleur 20 ;
- l'état de charge électrique (Ucapa) de l'élément tampon d'énergie 10.

En réponse, et en appliquant le procédé de l'invention, le dispositif de commande 2 retourne un signal de contrôle émis par des lignes 8 et 9 à destination des contrôleurs du variateur électrique 21 qui permet d'atteindre l'objectif de régulation sur le régime du moteur thermique quelque soit le couple à la roue To.

Dans un mode préféré de réalisation, le signal de contrôle émis par des lignes 8 et 9 est une paire de signaux de commande de couple $T_{e1}$# et $T_{e2}$# respectivement transmis à des entrées convenables des contrôleurs 19 et 20 des machines électriques $M_{e1}$ 11 et $M_{e2}$ 12.

Le procédé de l'invention est basé sur la structure de commande multivariable à trois consignes présentée dans la publication FR2834249. L'objet de la présente invention est de construire la couche intermédiaire de commande (COS) dans le mode « rétro » au cours duquel le moteur thermique n'est pas commandé par les deux couches supérieures.

Le superviseur ou contrôleur OPF qui exécute l'optimisation du point de fonctionnement du moteur thermique fournit à l'entrée du contrôleur de troisième couche COS une consigne de régime du moteur thermique. On dispose par ailleurs d'une consigne de tension du condensateur qui sert le plus souvent d'élément tampon d'énergie pour le variateur électrique. A partir de ces deux consignes et des mesures disponibles décrivant l'environnement du véhicule, comme la vitesse du véhicule ou la pente dans laquelle il est engagé, le contrôleur COS génère les consignes de couple pour les deux principaux actionneurs du GMP, à savoir les deux machines électriques (Me1 et Me2) dans le mode « rétro » concerné par l'invention.

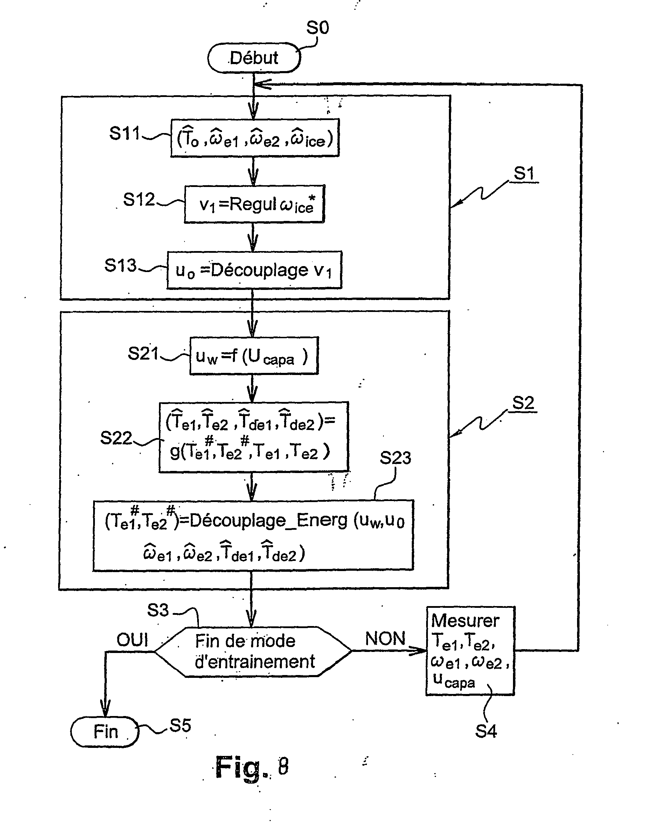

A la figure 8, on a représenté la séquence des opérations principales effectuées par le procédé de commande de l'invention.

Après une opération de début de commande lors d'une étape S0 au cours de laquelle le dispositif de commande de l'invention est configuré puis initialisé, et ultérieurement uniquement initialisé sauf lors d'opérations de maintenance, le contrôle passe à une étape S1 au cours de laquelle un signal de commande mécanique u0 est calculé sur la base d'un vecteur de mesure Z.

Selon une caractéristique de l'invention, le vecteur de mesure Z est composé de la mesure des couples fournis par les deux machines électriques Te1, Te2, de leurs régimes $\omega$e1, $\omega$e2 ainsi que de la tension Ucapa aux bornes de l'élément de stockage d'énergie.

Préférentiellement, cependant, la valeur de tension Ucapa aux bornes de l'élément tampon d'énergie électrique n'est pas exploitée lors de l'étape S1. L'étape S1 se caractérise par le fait que seul l'objectif de régulation mécanique est pris en compte.

Dans la première étape, le procédé de l'invention consiste à produire un signal intermédiaire de commande $u_0$. Pour effectuer cette étape de contrôle mécanique, le procédé de l'invention consiste à tenir compte des estimations des couples des machines électriques du variateur, de la valeur précédente du signal de commande mécanique estimée au pas précédent de calcul ainsi que d'un signal de commande énergétique $u_w$.

Puis, dans une seconde étape S2, le procédé de l'invention consiste à produire un signal de commande énergétique $u_w$, une correction du signal de commande mécanique $u_0(n)$, des estimations des couples des machines électriques du variateur $^\wedge T_{e1}$ et $^\wedge T_{e2}$ ainsi que des signaux de consigne des couples des machines électriques $T_{e1}$# et $T_{e2}$# qui seront réellement appliqués aux contrôleurs 14 et 15. Pour effectuer cette étape de contrôle énergétique, le procédé de l'invention consiste à tenir compte, en plus des signaux de mesure des grandeurs mesurées dans le vecteur Z (Figure 7) des capteurs du système, du signal intermédiaire de commande $u_0$, calculé lors de l'étape de contrôle mécanique précédente.

Lors d'une étape S3, on réalise un test de fin de boucle pour déterminer si le contrôle de l'invention se termine lorsqu'une décision de fin de mode d'entraînement en mode « rétro » a été prise.

Si le test est « OUI », une étape de Fin S5 est exécutée pour relâcher le contrôle.

Si le test S3 est « NON », le contrôle reste dans la boucle et une nouvelle mise à jour (étape S4) du vecteur de mesure Z = (Te1, Te2, $\omega$e1, $\omega$e2, Ucapa) est effectuée et le contrôle reprend le début de la boucle à l'étapeS1.

Dans un mode préféré de réalisation, l'étape S1 est subdivisée en trois étapes successives qui sont :

- une étape S11 au cours de laquelle on acquiert les estimations du couple de sortie du groupe motopropulseur $^\wedge$To, des régimes des deux machines électriques soit $^\wedge\omega$e1 et $^\wedge\omega$e2, et du moteur thermique, soit $^\wedge\omega$ice ;

- une étape S12 de production d'une valeur (v1) qui est obtenue en appliquant une fonction de régulation prédéterminée, qui peut être réalisée à l'aide des fonctions de régulation disponibles dans l'état de la technique selon une relation de la forme : (v1) = Regul($\omega$ice*), qui dépend des valeurs mesurées du régime moteur $\omega$ice ;
- une étape S13 de production d'une valeur (u0) qui est obtenue en appliquant une fonction de découplage prédéterminée, qui peut être réalisée à l'aide des fonctions de découplage disponibles dans l'état de la technique selon une relation de la forme : (u0) = Découplage (v1) qui dépend de la valeur calculée à l'étape S12.

Dans un mode préféré de réalisation, l'étape S2 est subdivisée en trois étapes successives qui sont :

- une étape S21 de production d'un signal intermédiaire de commande énergétique $u_w$ sur la base d'une fonction prédéterminée f() enregistrée ou programmée au préalable et qui dépend de la tension mesurée aux bornes de l'élément tampon d'énergie selon une relation de la forme uw = f(Ucapa) ;
- une étape S22 au cours de laquelle un vecteur d'estimation des couples positifs ou négatifs présents sur les arbres de rotation des deux machines électriques ainsi qu'une estimation de leurs perturbations est déterminée sur la base d'une fonction prédéterminée g() enregistrée ou programmée au préalable et qui dépend des consignes et des valeurs mesurées de couples des machines électriques selon une relation de la forme (^Te1, ^Te2, ^Tde1 ;^Tde2) = g(Te1#, Te2#, Te1, Te2) ;
- une étape S23 au cours de laquelle un vecteur de valeurs de consigne des couples des machines électriques du variateur est calculé sur la base d'une fonction prédéterminée Découplage_Energ() enregistrée ou programmée au préalable qui réalise la fonction connue de l'homme de métier de découplage mais qui l'exécute seulement dans l'objectif de régulation énergétique à la différence de la fonction Découplage() de l'étape S13, et qui dépend du signal de commande énergétique $u_w$ calculé lors de l'étape S21, du signal de commande mécanique $u_0$, calculé lors de l'étape précédente S13, et des estimations des régimes et des perturbations de couples des deux machines électriques du variateur selon une relation de la forme : (Te1#, Te2#) = Decouplage_Energ(uw, u0, ^$\omega$e1, ^$\omega$e2, ^Tde1, ^Tde2).

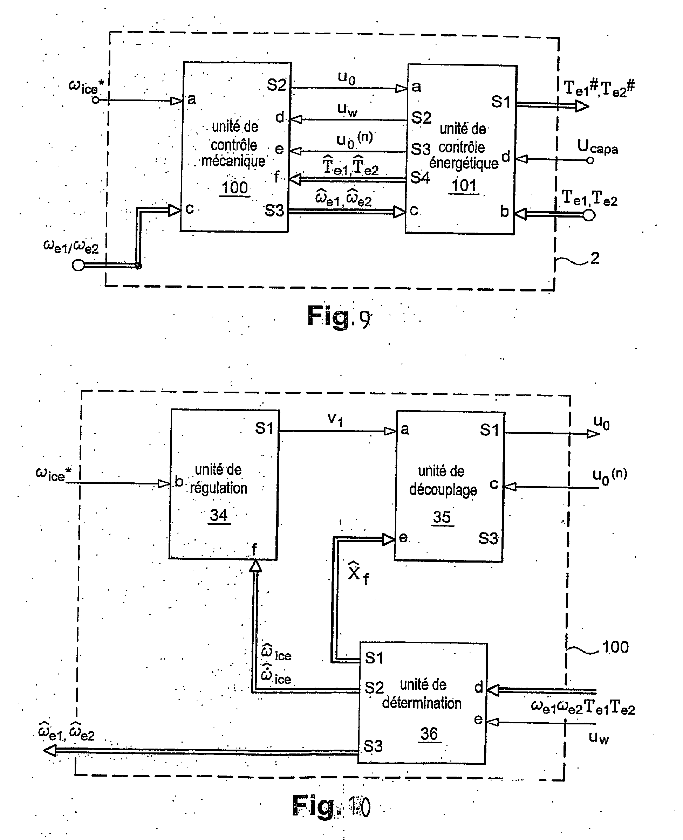

Le contrôleur de troisième niveau, partie du dispositif de commande 2 (voir figure 7) et qui est représenté à la figure 9, comporte :

- une unité de contrôle mécanique 100 ;
- une unité de contrôle énergétique 101.

L'unité de contrôle mécanique 100 comporte cinq portes d'entrée qui sont respectivement :

- une porte a qui reçoit une valeur indicatrice du régime moteur optimal $\omega_{ice}{}^*$ ;
- une porte qui reçoit la mesure des vitesses de rotation des machines électriques $\omega_{e1}$ et $\omega_{e2}$ ;
- une porte d connectée à l'unité de contrôle énergétique 101 pour recevoir le signal de commande énergétique $u_w$,
- une porte e connectée à l'unité de contrôle énergétique 101 pour recevoir une valeur précédente du signal de commande mécanique u0(n) ;
- une porte f connectée à l'unité de contrôle énergétique 101 pour recevoir les estimations des couples des machines électriques $^\wedge T_{e1}$ et $^\wedge T_{e2}$.

L'unité de contrôle mécanique 100 comporte deux portes de sortie qui sont respectivement :

- une porte S2 pour fournir le signal de commande mécanique $u_0$ à destination de l'unité de contrôle énergétique 101 ;
- une porte S3 qui fournit les estimations des régimes des deux machines électriques ^$\omega$e1 et ^$\omega$e2 à destination de l'unité de contrôle énergétique 101.

L'unité de contrôle énergétique 101 comporte quatre portes d'entrée qui sont respectivement :

- une porte a connectée à la sortie S2 de l'unité de contrôle mécanique 100 ;
- une porte b qui reçoit la mesure des couples des machines électriques $T_{e1}$ et $T_{e2}$ ;
- une porte c connectée à la sortie S3 de l'unité de contrôle mécanique 100 pour recevoir les estimations des régimes des machines électriques $^\wedge\omega_{e1}$ et $^\wedge\omega_{e2}$ ;
- une porte d qui reçoit la mesure de la tension aux bornes de l'élément tampon d'énergie du variateur électrique de la transmission.

L'unité de contrôle énergétique 101 comporte quatre portes de sortie qui sont respectivement :

- une porte S1 qui fournit les consignes de couple des machines électriques $T_{e1}^{\#}$ et $T_{e2}^{\#}$ ;
- une porte S2 connectée à la porte d'entrée d de l'unité de contrôle mécanique 100 qui lui fournit le signal de commande énergétique $u_w$ ;
- une porte S3 connectée à la porte d'entrée e de l'unité de contrôle mécanique 100 pour lui fournir une correction du signal de commande mécanique $u_0$ ;
- une porte S4 connectée à la porte d'entrée f de l'unité de contrôle mécanique 100 pour lui fournir une estimation des valeurs de couple des machines électriques $^\wedge T_{e1}$ et $^\wedge T_{e2}$.

A la Figure 10, on a représenté un mode particulier de réalisation des principales unités composant l'unité de contrôle mécanique 100 du contrôleur 25 qui sont :

- une unité de détermination 36 des variables décrivant l'état du système,
- une unité de régulation 34, et
- une unité de découplage 35.

Le paramétrage de ces unités repose sur un modèle de comportement du véhicule, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités, tels que décrits à l'aide des figures 7 et 8.

L'unité de régulation 34 comporte deux portes d'entrée :

- Une porte d'entrée b recevant un signal représentatif de la valeur optimale du régime moteur thermique $\omega_{ice}^{*}$ ;
- Une porte d'entrée f recevant un signal d'estimation du régime moteur $^\wedge\omega_{ice}$ et le cas échéant de sa dérivée temporelle $^\wedge\omega_{ice}{}'$.

L'unité de régulation 34 comporte une porte de sortie S1 de signal de commande intermédiaire v1.

L'unité de découplage 35 comporte trois portes d'entrée :

- Une porte d'entrée a recevant le signal de commande intermédiaire v1 issu de la sortie S1 de l'unité de régulation 34 ;
- Une porte d'entrée c recevant la correction du signal de commande mécanique u0(n) ;
- une porte d'entrée e recevant un signal d'estimation $^\wedge Xf$ d'un vecteur de contrôle $X_f$.

L'unité de découplage 35 comporte une porte de sortie S1 qui fournit un signal de commande mécanique u0.

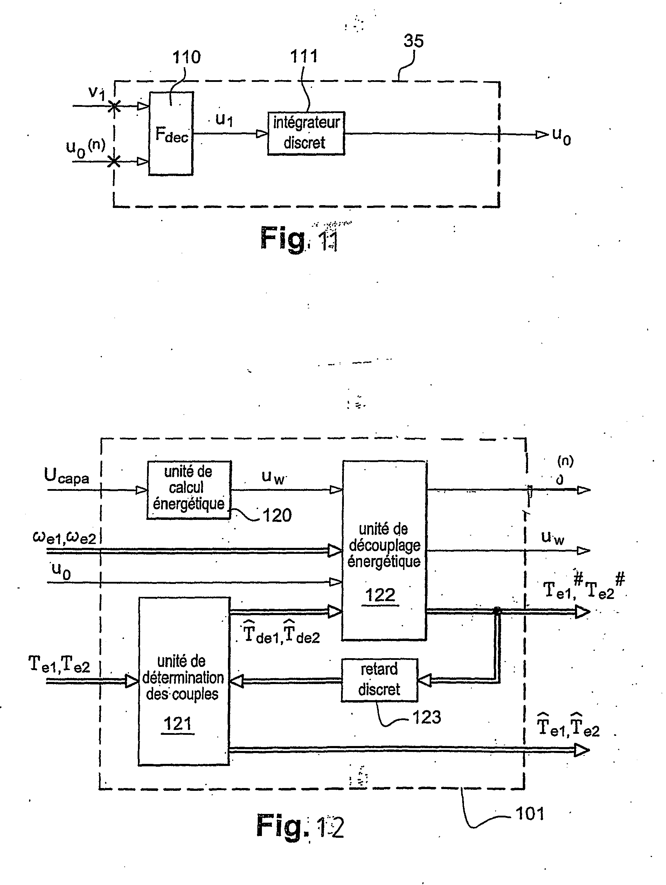

Un mode particulier de réalisation de l'unité de découplage 35 a été représenté à la figure 11 qui sera décrite plus loin.

L'unité de détermination 36 de l'estimation $^\wedge Xf$ a pour rôle de construire le signal d'estimation $^\wedge Xf$ contenant les principales variables décrivant l'état du système.

L'unité de détermination 36 comporte deux portes d'entrée :

- Une porte d'entrée d recevant un vecteur caractérisant l'état électrique des machines électriques $\omega_{e1}$, $\omega_{e2}$, $T_{e1}$, $T_{e2}$ ;
- Une porte d'entrée e recevant un signal représentatif du signal de contrôle énergétique $u_w$.

L'unité de détermination 36 comporte trois portes de sortie qui sont :

- Une porte de sortie S1 qui produit un signal d'estimation sous forme d'un vecteur $^\wedge Xf$ transmis à la porte d'entrée e de l'unité de découplage 35 ;
- Une porte de sortie S2 qui produit un signal d'estimation du régime moteur $^\wedge\omega_{ice}$, complété le cas échéant de sa variation temporelle $^\wedge\omega_{ice}{}'$, transmis à la porte d'entrée f de l'unité de régulation 34 ;
- Une porte de sortie S3 qui produit les valeurs d'estimation des régimes des deux machines électriques, soit $^\wedge\omega_1$, $^\wedge\omega_2$.

A la figure 11, on a représenté un mode particulier de réalisation d'un circuit permettant de réaliser le calcul du signal de commande mécanique $u_0$.

Le circuit 35 de découplage de la commande mécanique comporte un premier circuit 110 qui exécute l'opération d'inversion du modèle par dérivations successives. Le circuit 110 reçoit deux paramètres d'entrée qui sont respectivement :

- le signal de commande intermédiaire v1 ;
- la valeur antérieure du signal de commande mécanique $u_0(n)$.

Le circuit 110 produit de la manière qui a été rappelée ci-dessus le signal intermédiaire de commande u1 qui est fourni à l'entrée d'un circuit intégrateur discret 111 pour produire le signal de commande mécanique $u_0$.

À la figure 12, on a représenté un mode particulier de réalisation d'une unité de contrôle énergétique 101 telle qu'elle est représentée à la figure 9.

Le procédé de l'invention, ainsi qu'il a été défini ci-dessus, comporte une étape de calcul d'un signal de commande énergétique $u_w$ qui s'exécute en trois étapes successives.

Dans une première étape, une unité de calcul énergétique 120 produit une première estimation du signal de commande énergétique $u_w$ sur la base de la tension mesurée aux bornes de l'élément tampon d'énergie Ucapa.

Dans une seconde étape 121, on estime les couples $T_{e1}$ et $T_{e2}$ des machines électriques et leurs perturbations.

Dans une troisième étape 122, qui doit être réalisée après l'exécution des première et seconde étapes 120 et 121, le procédé de l'invention consiste à réaliser un découplage énergétique. Le découplage énergétique est effectué par un algorithme particulier, sur la base de la première estimation du signal de commande énergétique uw produite lors de l'étape 120, des estimations des perturbations $^{\wedge}T_{de1}$ et $^{\wedge}T_{de2}$ des couples des machines électriques, des estimations des vitesses de rotation des machines électriques et du signal de commande mécanique. L'opération de découplage énergétique produit en sortie :

- un signal de commande mécanique $u0^{(n)}$ corrigé ;
- un signal de commande énergétique $u_w$ ;
- des consignes de couple des machines électriques $T_{e1}^{\#}$, $T_{e2}^{\#}$.

L'unité de découplage énergétique 122 comporte un moyen pour produire un vecteur de commande des couples des machines électriques tout en assurant l'absence de perturbation du contrôle énergétique par le contrôle mécanique. Ce moyen d'isolement des contrôles mécanique et énergétique est réalisé par une unité de calcul de la relation :

$$Te^{\#} = AA \cdot u - {}^{\wedge}Tde$$

dans laquelle :

$Te^{\#}$ est un vecteur qui rassemble les deux consignes de couple des machines électriques représenté par $\begin{bmatrix} T_{e1}^{\#} \\ T_{e2}^{\#} \end{bmatrix}$ ;

AA est une matrice carrée qui est représentée par : $\begin{bmatrix} -\dfrac{\omega_{e1}}{\omega_{e1}^2 + \omega_{e2}^2} & -\dfrac{\omega_{e2}}{\Omega} \\ -\dfrac{\omega_{e2}}{\omega_{e1}^2 + \omega_{e2}^2} & \dfrac{\omega_{e1}}{\Omega} \end{bmatrix}$ matrice dans laquelle $\Omega$ est un paramètre de réglage obtenue par essais sur véhicule ;

u est un vecteur qui rassemble les deux signaux de consigne mécanique et énergétique représenté par : $\begin{bmatrix} u_w \\ u_0 \end{bmatrix}$ ;

Tde est un vecteur qui rassemble les deux estimations des perturbations de couple des machines électriques,

représenté par : $\begin{bmatrix} \hat{T}_{de1} \\ \hat{T}_{de2} \end{bmatrix}$.

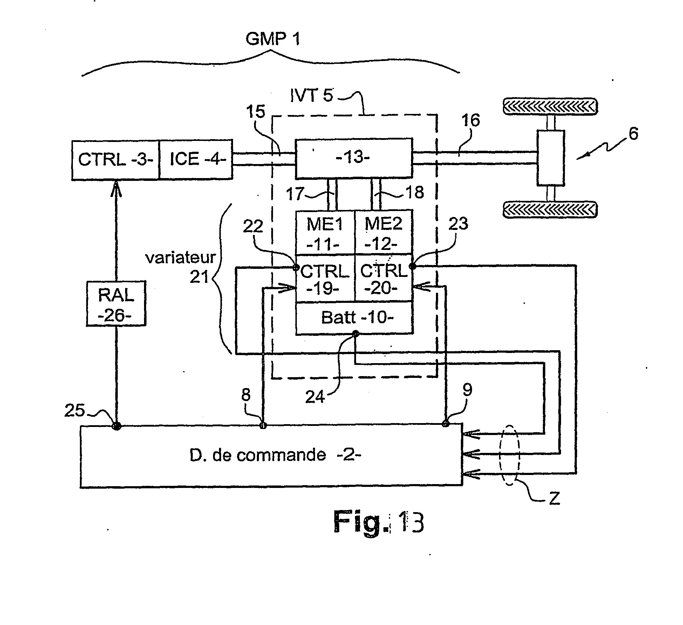

A la Figure 13 relative au mode rampage en couple, on a représenté un schéma bloc d'un véhicule équipé d'un groupe motopropulseur (GMP). Le groupe motopropulseur GMP est constitué d'un moteur thermique (ICE) 4 commandé en couple et d'une transmission infiniment variable (IVT) 5. Cette transmission est constituée d'une chaîne cinématique 13 comportant quatre voies d'échange de puissance mécanique et d'un variateur électrique 21. Le variateur électrique 21 est lui-même constitué de deux machines électriques $M_{e1}$, 11 et $M_{e2}$, 12 commandées en couple et liées électriquement par un élément tampon d'énergie 10. Bien que l'élément de stockage d'énergie 10 du mode de réalisation décrit soit un condensateur, le procédé de commande est également applicable au cas d'une transmission infiniment variable avec un stockage d'énergie de technologie différente telle qu'une batterie ou un super condensateur.

Chaque machine électrique $M_{e1}$, 11 ou $M_{e2}$, 12 peut travailler dans les quatre quadrants de caractéristique $(\omega_e, T_e)$, ou autrement dit :

- comme moteur, mode dans lequel la machine électrique tire de l'énergie électrique sur l'élément tampon d'énergie 10 et délivre de la puissance mécanique par un arbre 17 ou 18 sur la chaîne cinématique à quatre voies, ou
- comme générateur, mode dans lequel la machine électrique prélève de la puissance mécanique sur la chaîne cinématique 13 et recycle de l'énergie électrique vers l'élément tampon d'énergie 10.

La chaîne cinématique 13 comporte quatre arbres d'échange de puissance mécanique qui sont :

- Un arbre 15 pour échanger de la puissance mécanique avec le vilebrequin du moteur thermique 4 qui peut travailler en moteur ou en frein moteur ;
- Un arbre 16 pour échanger de la puissance mécanique avec les roues 6 du véhicule ;
- Des arbres 17 et 18 pour échanger de la puissance mécanique avec les rotors des deux machines électriques 11 et 12.

Le moteur thermique 4 est contrôlé en couple par un contrôleur 3 et les machines électriques 11 et 12 sont respectivement contrôlées par un contrôleur 19 et par un contrôleur 20. La chaîne cinématique 13 de la transmission IVT 5 comporte ainsi qu'il est connu des coupleurs comme des embrayages et des freins qui sont commandés par un contrôleur de mode de transmission qui n'est ni décrit ni représenté dans la présente demande mais qui est défini dans les précédentes demandes de brevet précitées du demandeur.

Le mode de fonctionnement du groupe motopropulseur GMP concerné par la figure 13 est un mode appelé mode « rampage en couple » au cours duquel le moteur thermique fournit un couple de ralenti à la transmission. Au cours de ce mode, le seul objectif mécanique poursuivi par le procédé de l'invention est la régulation du couple aux roues. L'objectif énergétique poursuivi par le procédé de l'invention est la régulation de la tension du condensateur.

Dans la suite de la description, on exploitera les grandeurs désignées par les notations :

- $\omega_{e1}$ : régime de la première machine électrique 11,
- $\omega_{e2}$ : régime de la seconde machine électrique 12,
- $Td_{e1}$ : couple de perturbation appliqué sur le couple fourni par la première machine électrique $M_{e1}$ 11,
- $Td_{e2}$ : couple de perturbation appliqué sur le couple fourni par la seconde machine électrique $M_{e2}$ 12,
- $T_{e1}\#$ : consigne de couple pour la première machine électrique $M_{e1}$ 11,
- $T_{e2}\#$ : consigne de couple pour la seconde machine électrique $M_{e2}$ 12,
- $\omega_{ice}$ : régime du moteur thermique $_{ice}$ 4,
- $T_{ice}$ : couple du moteur thermique $_{ice}$ appliqué sur le vilebrequin 8,
- $Td_{ice}$ : couple de perturbation appliqué sur le vilebrequin du moteur thermique 4,
- $T_{ice}\#$ : consigne de couple pour le moteur thermique 4,
- $To$: couple appliqué aux roues par le groupe motopropulseur GMP,
- $T_{dwh}$ : couple de perturbation appliqué sur le couple aux roues,
- $W$ : niveau d'énergie du condensateur,
- $\varphi(T_{e1}, T_{e2}, \omega_{e1}, \omega_{e2})$ : cette fonction scalaire est définie par la puissance échangée par le condensateur 10 avec les machines électriques, ainsi que l'ensemble des pertes du variateur électrique comprenant les deux machines électriques $M_{e1}$ et $M_{e2}$ et leur condensateur de stockage,
- $PdW$ : puissance de perturbation appliquée sur la dynamique du condensateur.

Les variables décrivant l'état du système sont divisées en deux listes unidimensionnelles ou vecteurs X1 et X2, ici représentées sous leur forme vectorielle transposée :

$$X1 = [\omega_{e1}, \omega_{e1}, T_{Ice}, T_{dwh}, Td_{Ice}, Td_{e1}, Td_{e2}] \tag{8}$$

$$X2 = [W, PdW] \qquad\qquad (9)$$

Le vecteur d'état X1 comporte :

- des valeurs de régime du variateur électrique ;
- des valeurs de couple moteur thermique ;
- des valeurs de perturbation des signaux de couple.

Le vecteur d'état X2 comporte :

- au moins une valeur décrivant l'état énergétique de l'élément tampon d'énergie dans le variateur de vitesses ;
- au moins une valeur de perturbation de cet état énergétique.

Le dispositif de commande 2 de l'invention reçoit en entrée un vecteur V de trois groupes de paramètres d'état du variateur électrique 21 qui sont :

- l'état de puissance électrique ($T_{e1}$, $\omega_{e1}$) de la machine électrique $M_{e1}$ 11 par une ligne 22 issue du contrôleur 19 ;
- l'état de puissance électrique ($T_{e2}$, $\omega_{e2}$) de la machine électrique $M_{e2}$ 12 par une ligne 23 issue du contrôleur 20 ;
- l'état de charge électrique (Ucapa) de l'élément tampon d'énergie 10.

En réponse, et en appliquant le procédé de l'invention, le dispositif de commande 2 retourne des signaux de contrôle émis par des lignes 8 et 9 à destination des contrôleurs du variateur électrique 21 qui permet d'atteindre l'objectif de régulation de couple à la roue To.

Dans un mode préféré de réalisation, le signal de contrôle émis par des lignes 8 et 9 est une paire de signaux de commande de couple $T_{e1}$# et $T_{e2}$# respectivement transmis à des entrées convenables des contrôleurs 19 et 20 des machines électriques $M_{e1}$ 11 et $M_{e2}$ 12.

Le procédé de l'invention est basé sur la structure de commande multivariable à trois consignes présentée dans la publication FR2834249. L'objet de la présente invention est de construire la couche intermédiaire de commande (COS) dans le mode « rampage en couple » au cours duquel le moteur thermique n'est pas commandé par les deux couches supérieures, mais travaille en régime de ralenti sans être découplé de la transmission infiniment variable. Dans cette situation, le véhicule se déplace à une faible vitesse et le système de freinage peut être activé. La cible mécanique est alors un couple à la roue qui réduit la vitesse du véhicule.

Le superviseur ou contrôleur fournit à l'entrée du contrôleur de troisième couche une consigne de couple aux roues. On dispose par ailleurs d'une consigne de tension du condensateur qui sert le plus souvent d'élément tampon d'énergie pour le variateur électrique. A partir de ces deux consignes et des mesures disponibles décrivant l'environnement du véhicule, comme la vitesse du véhicule ou la pente dans laquelle il est engagé, le contrôleur génère les consignes de couple pour les deux principaux actionneurs du GMP, à savoir les deux machines électriques (Me1 et Me2) dans le mode « rampage en couple » concerné par l'invention.

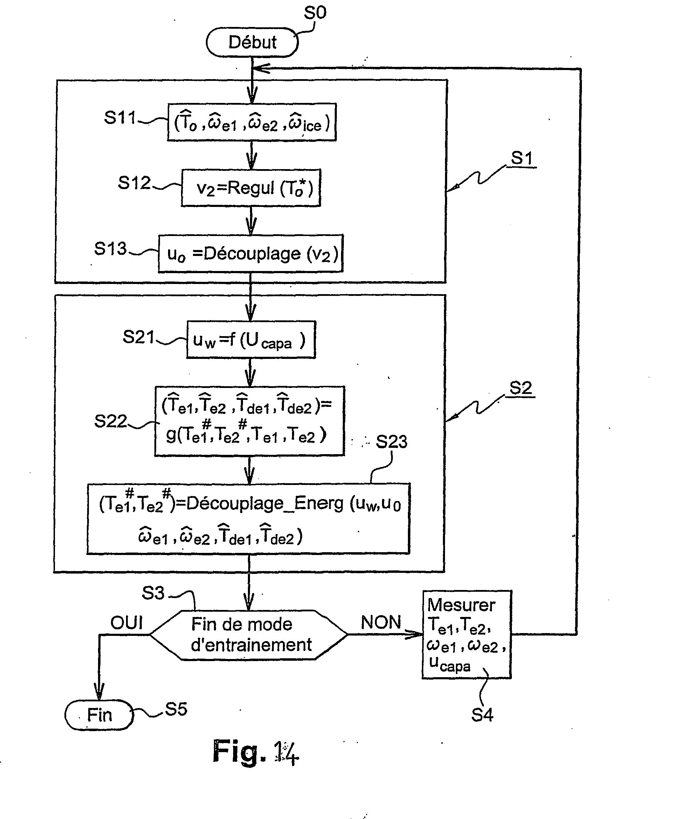

A la figure 14, on a représenté la séquence des opérations principales effectuées par le procédé de commande de l'invention.

Après une opération de début de commande lors d'une étape S0 au cours de laquelle le dispositif de commande de l'invention est configuré puis initialisé, et ultérieurement uniquement initialisé sauf lors d'opérations de maintenance, le contrôle passe à une étape S1 au cours de laquelle un signal de commande mécanique u0 est calculé sur la base d'un vecteur de mesure Z.

Selon une caractéristique de l'invention, le vecteur de mesure Z est composé de la mesure des couples fournis par les deux machines électriques Te1, Te2, de leurs régimes $\omega$e1, $\omega$e2 ainsi que de la tension Ucapa aux bornes de l'élément de stockage d'énergie.

Préférentiellement, cependant, la valeur de tension Ucapa aux bornes de l'élément tampon d'énergie électrique n'est pas exploitée lors de l'étape S1. L'étape S1 se caractérise par le fait que seul l'objectif de régulation mécanique est pris en compte et aucune commande en découle pour le moteur thermique qui est alors indirectement commandé par un contrôleur de ralenti.

Dans la première étape, le procédé de l'invention consiste à produire un signal intermédiaire de commande $u_0$. Pour effectuer cette étape de contrôle mécanique, le procédé de l'invention consiste à tenir compte des estimations des couples des machines électriques du variateur, ainsi que de la valeur précédente du signal de commande mécanique estimée au pas précédent de calcul ainsi que d'un signal de commande énergétique $u_w$.

Puis, dans une seconde étape S2, le procédé de l'invention consiste à produire un signal de commande énergétique $u_w$, une correction du signal de commande mécanique $u_0(n)$, des estimations des couples des machines électriques du variateur $^\wedge T_{e1}$ et $^\wedge T_{e2}$ ainsi que des signaux de consigne des couples des machines électriques $T_{e1}{}^\#$ et $T_{e2}{}^\#$ qui seront réellement appliqués aux contrôleurs 14 et 15. Pour effectuer cette étape de contrôle énergétique, le procédé de l'invention consiste à tenir compte, en plus des signaux de mesure des grandeurs mesurées dans le vecteur Z (Figure 13) des capteurs du système, du signal intermédiaire de commande $u_0$, calculé lors de l'étape de contrôle mécanique précédente.

Lors d'une étape S3, on réalise un test de fin de boucle pour déterminer si le contrôle de l'invention se termine lorsqu'une décision de fin de mode d'entraînement en mode « rampage en couple » a été prise.

Si le test est « OUI », une étape de Fin S5 est exécutée pour relâcher le contrôle.

Si le test S3 est « NON », le contrôle reste dans la boucle et une nouvelle mise à jour (étape S4) du vecteur de mesure Z = (Te1, Te2, $\omega$e1, $\omega$e2, Ucapa) est effectuée et le contrôle reprend le début de la boucle à l'étapeS1.

Dans un mode préféré de réalisation, l'étape S1 est subdivisée en trois étapes successives qui sont :

- une étape S11 au cours de laquelle on acquiert les estimations du couple de sortie du groupe motopropulseur $^\wedge$To et des régimes des deux machines électriques soit $^\wedge\omega$e1 et $^\wedge\omega$e2 ;
- une étape S12 de production d'une valeur (v2) qui est obtenue en appliquant une fonction de régulation prédéterminée, qui peut être réalisée à l'aide des fonctions de régulation disponibles dans l'état de la technique selon une relation de la forme : (v2) = Regul(To*), qui dépend de la valeur mesurée du couple de sortie To ;
- une étape S13 de production d'une valeur (u0) qui est obtenue en appliquant une fonction de découplage prédéterminée, qui peut être réalisée à l'aide des fonctions de découplage disponibles dans l'état de la technique selon une relation de la forme : (u0) = Découplage (v2) qui dépend de la valeur v2 calculée à l'étape S12.

Dans un mode préféré de réalisation, l'étape S2 est subdivisée en trois étapes successives qui sont :

- une étape S21 de production d'un signal intermédiaire de commande énergétique $u_w$ sur la base d'une fonction prédéterminée f() enregistrée ou programmée au préalable et qui dépend de la tension mesurée aux bornes de l'élément tampon d'énergie selon une relation de la forme uw = f(Ucapa) ;
- une étape S22 au cours de laquelle un vecteur d'estimation des couples positifs ou négatifs présents sur les arbres de rotation des deux machines électriques ainsi qu'une estimation de leurs perturbations est déterminée sur la base d'une fonction prédéterminée g() enregistrée ou programmée au préalable et qui dépend des consignes et des valeurs mesurées de couples des machines électriques selon une relation de la forme ($^\wedge$Te1, $^\wedge$Te2, $^\wedge$Tde1, $^\wedge$Tde2) = g(Te1#, Te2#, Te1, Te2) ;
- une étape S23 au cours de laquelle un vecteur de valeurs de consigne des couples des machines électriques du variateur est calculé sur la base d'une fonction prédéterminée Découplage_Energ() enregistrée ou programmée au préalable qui réalise la fonction connue de l'homme de métier de découplage mais qui l'exécute seulement dans l'objectif de régulation énergétique à la différence de la fonction Découplage() de l'étape S13, et qui dépend du signal de commande énergétique $u_w$ calculé lors de l'étape S21, du signal de commande mécanique $u_0$, calculé lors de l'étape précédente S13, et des estimations des régimes et des perturbations de couples des deux machines électriques du variateur selon une relation de la forme : (Te1#, Te2#) = Decouplage_Energ(uw, u0, $^\wedge\omega$e1, $^\wedge\omega$e2, $^\wedge$Tde1, $^\wedge$Tde2).

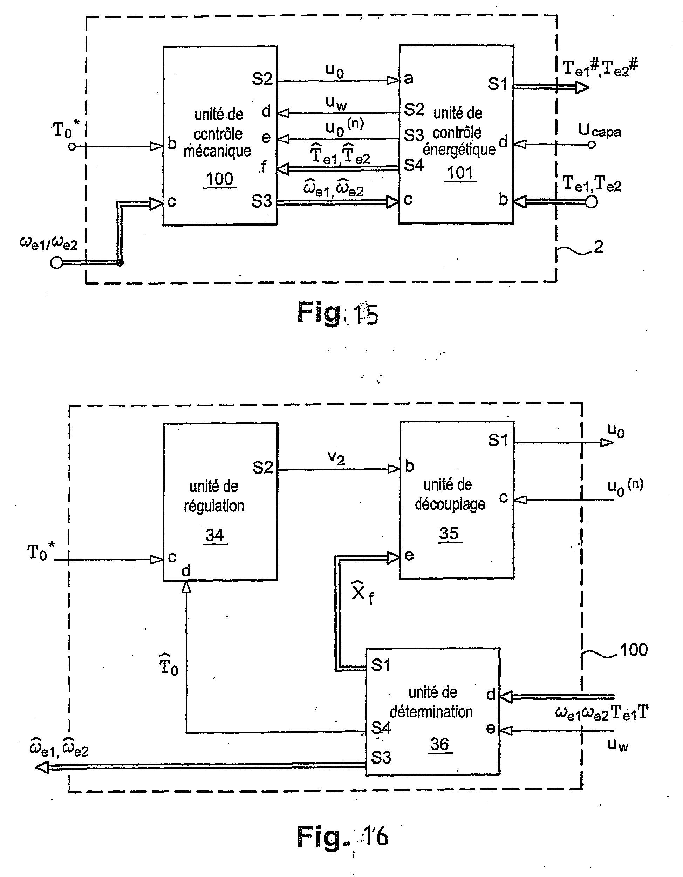

Le contrôleur de troisième niveau, partie du dispositif de commande 2 (voir figure 13) et qui est représenté à la figure 15, comporte :

- une unité de contrôle mécanique 100 ;
- une unité de contrôle énergétique 101.

L'unité de contrôle mécanique 100 comporte cinq portes d'entrée qui sont respectivement :

- une porte b qui reçoit une valeur indicatrice du couple moteur optimal To*;
- une porte c connectée qui reçoit la mesure des vitesses de rotation des machines électriques $\omega_{e1}$ et $\omega_{e2}$ ;
- une porte d connectée à l'unité de contrôle énergétique 101 pour recevoir le signal de commande énergétique $u_w$,
- une porte e connectée à l'unité de contrôle énergétique 101 pour recevoir une valeur précédente du signal de commande mécanique u0(n) ;
- une porte f connectée à l'unité de contrôle énergétique 101 pour recevoir les estimations des couples des machines électriques $^\wedge T_{e1}$ et $^\wedge T_{e2}$.

L'unité de contrôle mécanique 100 comporte deux portes de sortie qui sont respectivement :

- une porte S2 pour fournir le signal de commande mécanique $u_0$ à destination de l'unité de contrôle énergétique 101 ;
- une porte S3 qui fournit les estimations des régimes des deux machines électriques $\hat{\omega}e1$ et $\hat{\omega}e2$ à destination de l'unité de contrôle énergétique 101.

L'unité de contrôle énergétique 101 comporte quatre portes d'entrée qui sont respectivement :

- une porte a connectée à la sortie S2 de l'unité de contrôle mécanique 100 ;
- une porte b qui reçoit la mesure des couples des machines électriques $T_{e1}$ et $T_{e2}$ ;
- une porte c connectée à la sortie S3 de l'unité de contrôle mécanique 100 pour recevoir la mesure des estimations des régimes des machines électriques $\hat{\omega}_{e1}$ et $\hat{\omega}_{e2}$ ;
- une porte d qui reçoit la mesure de la tension aux bornes de l'élément tampon d'énergie du variateur électrique de la transmission.

L'unité de contrôle énergétique 101 comporte quatre portes de sortie qui sont respectivement :

- une porte S1 qui fournit les consignes de couple des machines électriques $T_{e1}^{\#}$ et $T_{e2}^{\#}$;
- une porte S2 connectée à la porte d'entrée d de l'unité de contrôle mécanique 100 qui lui fournit le signal de commande énergétique $u_w$ ;
- une porte S3 connectée à la porte d'entrée e de l'unité de contrôle mécanique 100 pour lui fournir une correction du signal de commande mécanique $u_0$ ;
- une porte S4 connectée à la porte d'entrée f de l'unité de contrôle mécanique 100 pour lui fournir une estimation des valeurs de couple des machines électriques $\hat{T}_{e1}$ et $\hat{T}_{e2}$.

A la Figure 16, on a représenté un mode particulier de réalisation des principales unités composant l'unité de contrôle mécanique 100 du contrôleur 2 (Figure 13) de troisième niveau COS qui sont :

- une unité de détermination 36 des variables décrivant l'état du système,
- une unité de régulation 34, et
- une unité de découplage 35.

Le paramétrage de ces unités repose sur un modèle de comportement du véhicule, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités, tels que décrits à l'aide des figures 13 et 14.

L'unité de régulation 34 comporte deux portes d'entrée :

- Une porte d'entrée c recevant un signal représentatif de la valeur optimale de couple aux roues To* ;
- Une porte d'entrée d recevant un signal représentatif d'une estimation de la valeur de couple aux roues ^To.

L'unité de régulation 34 comporte une porte de sortie S2 de signal de commande intermédiaire v2.
L'unité de découplage 35 comporte trois portes d'entrée :

- Une porte d'entrée b recevant le signal de commande intermédiaire v2 issu de la sortie S2 de l'unité de régulation 34 ;
- Une porte d'entrée c recevant la correction du signal de commande mécanique u0(n) ;
- une porte d'entrée e recevant un signal d'estimation d'un vecteur de contrôle $X_f$.

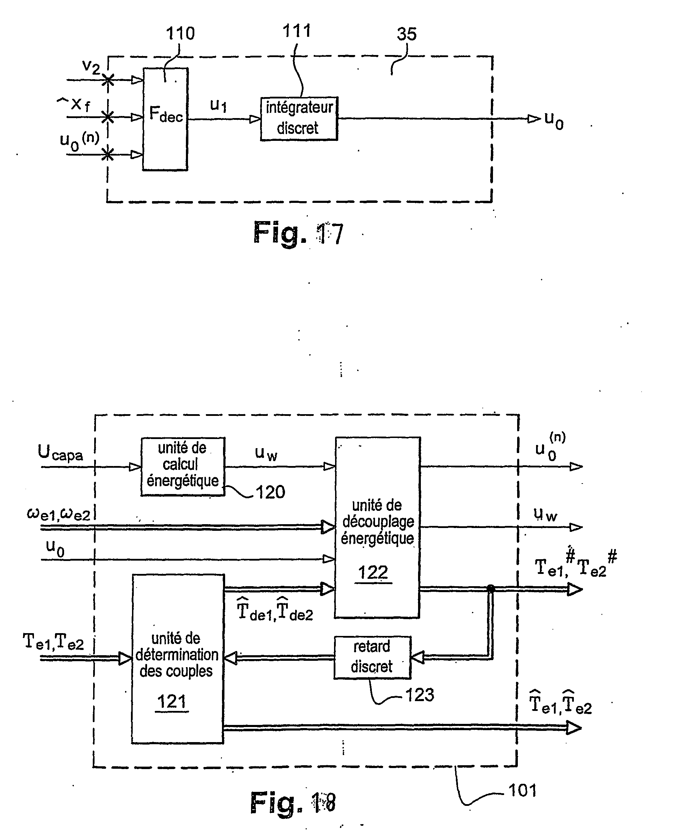

L'unité de découplage 35 comporte une porte de sortie S1 qui fournit un signal de commande mécanique u0.
Un mode particulier de réalisation de l'unité de découplage 35 a été représenté à la figure 17 qui sera décrite plus loin.
L'unité de détermination 36 de l'estimation ^Xf a pour rôle de construire le signal d'estimation ^Xf contenant les principales variables décrivant l'état du système.
L'unité de détermination 36 comporte deux portes d'entrée :

- Une porte d'entrée d recevant un vecteur caractérisant l'état électrique des machines électriques $\omega_{e1}$, $\omega_{e2}$, $T_{e1}$, $T_{e2}$ ;
- Une porte d'entrée e recevant un signal de commande énergétique $u_w$.

L'unité de détermination 36 comporte trois portes de sortie qui sont :

- Une porte de sortie S1 qui produit un signal d'estimation sous forme d'un vecteur ^Xf transmis à la porte d'entrée e de l'unité de découplage 35 ;
- Une porte de sortie S4 qui produit une estimation du couple à la roue ^To, transmis à la porte d'entrée d de l'unité de régulation 34 ;
- Une porte de sortie S3 qui produit des valeurs d'estimation des régimes des machines électriques.

A la figure 17, on a représenté un mode particulier de réalisation d'un circuit permettant de réaliser le calcul du signal de commande mécanique u0.

Le circuit 35 de découplage de la commande mécanique comporte un premier circuit 110 qui exécute l'opération d'inversion du modèle par dérivations successives. Le circuit 110 reçoit trois paramètres d'entrée qui sont respectivement :

- le signal de commande intermédiaire v2 ;
- l'estimation ^Xf du vecteur Xf ;
- la valeur antérieure du signal de commande mécanique u0(n).

Le circuit 110 produit de la manière qui a été rappelée ci-dessus le signal intermédiaire de commande u1 qui est fourni à l'entrée d'un circuit intégrateur discret 111 pour produire le signal de commande mécanique u0.

À la figure 18, on a représenté un mode particulier de réalisation d'une unité de contrôle énergétique 101 telle qu'elle est représentée à la figure 3.

Le procédé de l'invention, ainsi qu'il a été défini ci-dessus, comporte une étape de calcul d'un signal de commande énergétique $u_w$ qui s'exécute en trois étapes successives.

Dans une première étape, une unité de calcul énergétique 120 produit une première estimation du signal de commande énergétique $u_w$ sur la base de la tension mesurée aux bornes de l'élément tampon d'énergie Ucapa.

Dans une seconde étampe 121, on estime les couples $T_{e1}$ et $T_{e2}$ des machines électriques et leurs perturbations.

Dans une troisième étape 122, qui doit être réalisée après l'exécution des première et seconde étapes 120 et 121, le procédé de l'invention consiste à réaliser un découplage énergétique. Le découplage énergétique est effectué par un algorithme particulier, sur la base de la première estimation du signal de commande énergétique uw produite lors de l'étape 120, des estimations des perturbations $^T_{de1}$ et $^T_{de2}$ des couples des machines électriques, des estimations des vitesses de rotation des machines électriques et du signal de commande mécanique. L'opération de découplage énergétique produit en sortie :

- un signal de commande mécanique corrigé u0 ;
- un signal de commande énergétique $u_w$ ;
- des consignes de couple des machines électriques $T_{e1}{}^\#$, $T_{e2}{}^\#$.

L'unité de découplage énergétique 122 comporte un moyen pour produire un vecteur de commande des couples des machines électriques tout en assurant l'absence de perturbation du contrôle énergétique par le contrôle mécanique. Ce moyen d'isolement des contrôles mécanique et énergétique est réalisé par une unité de calcul de la relation :

$$\mathrm{Te}^{\#} = \mathrm{AA} \cdot \mathrm{u} - {}^\wedge\mathrm{Tde}$$

dans laquelle :

$\mathrm{Te}^\#$ est un vecteur qui rassemble les deux consignes de couple des machines électriques représenté par $\begin{bmatrix} T_{e1}^\# \\ T_{e2}^\# \end{bmatrix}$ ;

AA est une matrice carrée qui est représentée par : $\begin{bmatrix} -\dfrac{\omega_{e1}}{\omega_{e1}^2 + \omega_{e2}^2} & -\dfrac{\omega_{e2}}{\Omega} \\ -\dfrac{\omega_{e2}}{\omega_{e1}^2 + \omega_{e2}^2} & \dfrac{\omega_{e1}}{\Omega} \end{bmatrix}$ matrice dans laquelle $\Omega$ est un

paramètre de réglage obtenue par essais sur véhicule ;

u est un vecteur qui rassemble les deux signaux de consigne mécanique et énergétique représenté par : $\begin{bmatrix} u_w \\ u_0 \end{bmatrix}$

Tde est un vecteur qui rassemble les deux estimations des variations de couple des machines électriques, représenté

par : $\begin{bmatrix} \hat{T}_{de1} \\ \hat{T}_{de2} \end{bmatrix}$.

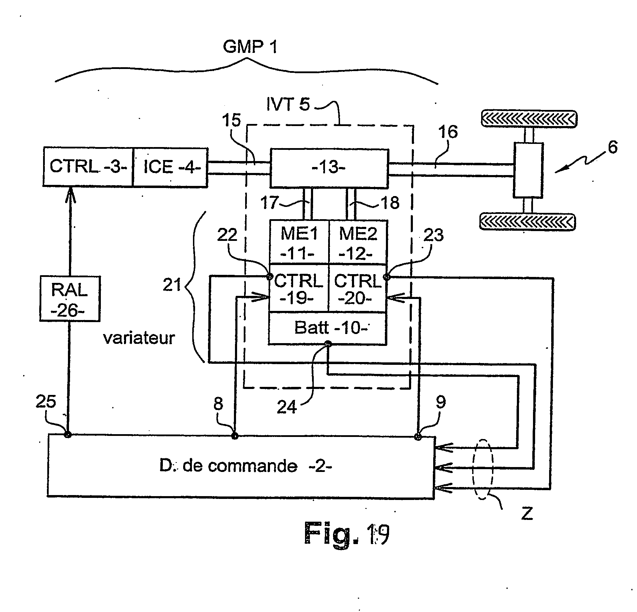

A la Figure 19 relative au mode rampage en vitesse, on a représenté un schéma bloc d'un véhicule équipé d'un groupe motopropulseur (GMP). Le groupe motopropulseur GMP est constitué d'un moteur thermique (ICE) 4 commandé en couple et d'une transmission infiniment variable (IVT) 5. Cette transmission est constituée d'une chaîne cinématique 13 comportant quatre voies d'échange de puissance mécanique et d'un variateur électrique 21. Le variateur électrique 21 est lui-même constitué de deux machines électriques $M_{e1}$, 11 et $M_{e2}$, 12 commandées en couple et liées électriquement par un élément tampon d'énergie 10. Bien que l'élément de stockage d'énergie 10 du mode de réalisation décrit soit un condensateur, le procédé de commande est également applicable au cas d'une transmission infiniment variable avec un stockage d'énergie de technologie différente telle qu'une batterie ou un super condensateur.
Chaque machine électrique $M_{e1}$, 11 ou $M_{e2}$, 12 peut travailler dans les quatre quadrants de caractéristique $(\omega_e, T_e)$, ou autrement dit :

- comme moteur, mode dans lequel la machine électrique tire de l'énergie électrique sur l'élément tampon d'énergie 10 et délivre de la puissance mécanique par un arbre 17 ou 18 sur la chaîne cinématique à quatre voies, ou
- comme générateur, mode dans lequel la machine électrique prélève de la puissance mécanique sur la chaîne cinématique 13 et recycle de l'énergie électrique vers l'élément tampon d'énergie 10.

La chaîne cinématique 13 comporte quatre arbres d'échange de puissance mécanique qui sont :

- Un arbre 15 pour échanger de la puissance mécanique avec le vilebrequin du moteur thermique 4 qui peut travailler en moteur ou en frein moteur ;
- Un arbre 16 pour échanger de la puissance mécanique avec les roues 6 du véhicule ;
- Des arbres 17 et 18 pour échanger de la puissance mécanique avec les rotors des deux machines électriques 11 et 12.

Le moteur thermique 4 est contrôlé en couple par un contrôleur 3 et les machines électriques 11 et 12 sont respectivement contrôlées par un contrôleur 19 et par un contrôleur 20. La chaîne cinématique 13 de la transmission IVT 5 comporte ainsi qu'il est connu des coupleurs comme des embrayages et des freins qui sont commandés par un contrôleur de mode de transmission qui n'est ni décrit ni représenté dans la présente demande mais qui est défini dans les précédentes demandes de brevet précitées du demandeur.
Le mode de fonctionnement du groupe motopropulseur GMP concerné par la figure 19 est un mode d'entraînement appelé « rampage en vitesse » au cours duquel le moteur thermique fournit un couple de ralenti à la transmission. Au cours de ce mode, le seul objectif mécanique poursuivi par le procédé de l'invention est la régulation du régime des roues. L'objectif énergétique poursuivi par le procédé de l'invention est la régulation de la tension du condensateur.
Dans la suite de la description, on exploitera les grandeurs désignées par les notations :

- $\omega_{e1}$ : régime de la première machine électrique 11,
- $\omega_{e2}$ : régime de la seconde machine électrique 12,
- $Td_{e1}$ : couple de perturbation appliqué sur le couple fourni par la première machine électrique $M_{e1}$ 11,
- $Td_{e2}$ : couple de perturbation appliqué sur le couple fourni par la seconde machine électrique $M_{e2}$ 12,
- $T_{e1}\#$ : consigne de couple pour la première machine électrique $M_{e1}$ 11,
- $T_{e2}\#$ : consigne de couple pour la seconde machine électrique $M_{e2}$ 12,
- $\omega_{ice}$ : régime du moteur thermique ice 4,
- $T_{ice}$ : couple du moteur thermique ice appliqué sur le vilebrequin 8,
- $Td_{ice}$ : couple de perturbation appliqué sur le vilebrequin du moteur thermique 4,
- $T_{ice}\#$ : consigne de couple pour le moteur thermique 4,

- To: couple appliqué aux roues par le groupe motopropulseur GMP,
- $T_{dwh}$ : couple de perturbation appliqué sur le couple aux roues,
- W : niveau d'énergie du condensateur,
- $\varphi(T_{e1}, T_{e2}, \omega_{e1}, \omega_{e2})$ : cette fonction scalaire est définie par la puissance échangée par le condensateur 10 avec les machines électriques, ainsi que l'ensemble des pertes du variateur électrique comprenant les deux machines électriques $M_{e1}$ et $M_{e2}$ et leur condensateur de stockage,
- PdW : puissance de perturbation appliquée sur la dynamique du condensateur.

Les variables décrivant l'état du système sont divisées en deux listes unidimensionnelles ou vecteurs X1 et X2, ici représentées sous leur forme vectorielle transposée :

$$X1 = [\omega_{e1}, \omega_{e1}, T_{ice}, T_{dwh}, Td_{ice}, Td_{e1}, Td_{e2}] \qquad (8)$$

$$X2 = [W, PdW] \qquad (9)$$

Le vecteur d'état X1 comporte :

- ● des valeurs de régime du variateur électrique ;
- ● des valeurs de couple moteur thermique ;
- ● des valeurs de perturbation des signaux de couple.

Le vecteur d'état X2 comporte :

- ● au moins une valeur décrivant l'état énergétique de l'élément tampon d'énergie dans le variateur de vitesses ;
- ● au moins une valeur de perturbation de cet état énergétique.

Le dispositif de commande 2 de l'invention reçoit en entrée un vecteur V de trois groupes de paramètres d'état du variateur électrique 21 qui sont :

- l'état de puissance électrique ($T_{e1}$, $\omega_{e1}$) de la machine électrique $M_{e1}$ 11 par une ligne 22 issue du contrôleur 19 ;
- l'état de puissance électrique ($T_{e2}$, $\omega_{e2}$) de la machine électrique $M_{e2}$ 12 par une ligne 23 issue du contrôleur 20 ;
- l'état de charge électrique (Ucapa) de l'élément tampon d'énergie 10.

En réponse, et en appliquant le procédé de l'invention, le dispositif de commande 2 retourne des signaux de contrôle émis par des lignes 8 et 9 à destination des contrôleurs du variateur électrique 21 qui permet d'atteindre l'objectif de régulation de régime des roues.

Dans un mode préféré de réalisation, le signal de contrôle émis par des lignes 8 et 9 est une paire de signaux de commande de couple $T_{e1}$# et $T_{e2}$# respectivement transmis à des entrées convenables des contrôleurs 19 et 20 des machines électriques $M_{e1}$ 11 et $M_{e2}$ 12.

Le procédé de l'invention est basé sur la structure de commande multivariable à trois consignes présentée dans la publication FR2834249. Un objet de la présente invention est de construire la couche intermédiaire de commande (COS) dans le mode « rampage en vitesse » au cours duquel le moteur thermique n'est pas commandé par les deux couches supérieures, mais travaille en régime de ralenti sans être découplé de la transmission infiniment variable, même en « neutre en prise ».

Le superviseur ou contrôleur IVC fournit à l'entrée du contrôleur de troisième couche COS une consigne de régime des roues. On dispose par ailleurs d'une consigne de tension du condensateur qui sert le plus souvent d'élément tampon d'énergie pour le variateur électrique. A partir de ces deux consignes et des mesures disponibles décrivant l'environnement du véhicule, comme la vitesse du véhicule ou la pente dans laquelle il est engagé, le contrôleur COS génère les consignes de couple pour les deux principaux actionneurs du GMP, à savoir les deux machines électriques ($M_{e1}$ et $M_{e2}$) dans le mode « rampage en vitesse » concerné par l'invention.

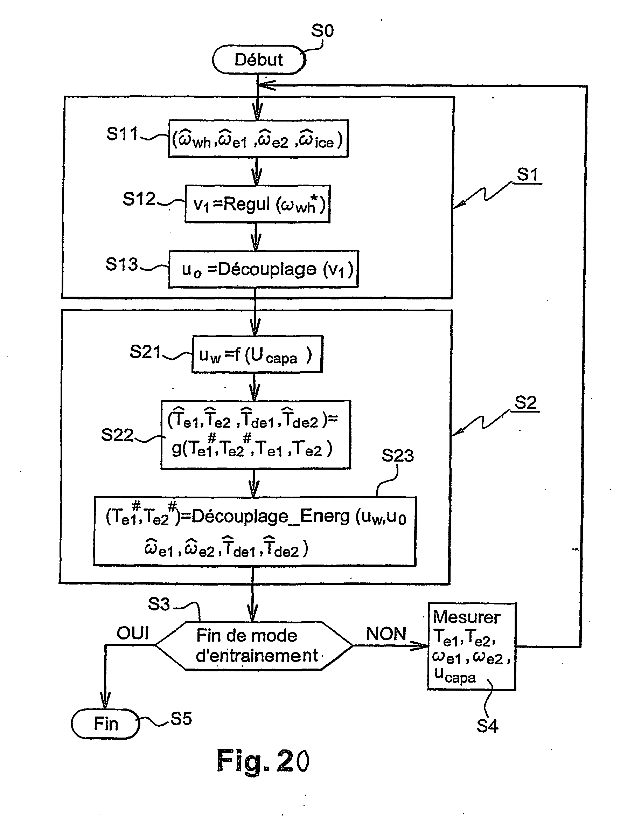

A la figure 20, on a représenté la séquence des opérations principales effectuées par le procédé de commande de l'invention.

Après une opération de début de commande lors d'une étape S0 au cours de laquelle le dispositif de commande de l'invention est configuré puis initialisé, et ultérieurement uniquement initialisé sauf lors d'opérations de maintenance, le contrôle passe à une étape S1 au cours de laquelle un signal de commande mécanique u0 est calculé sur la base d'un vecteur de mesure Z.

Selon une caractéristique de l'invention, le vecteur de mesure Z est composé de la mesure des couples fournis par les deux machines électriques $T_{e1}$, $T_{e2}$, de leurs régimes $\omega_{e1}$, $\omega_{e2}$ ainsi que de la tension Ucapa aux bornes de l'élément de stockage d'énergie.

Préférentiellement, cependant, la valeur de tension Ucapa aux bornes de l'élément tampon d'énergie électrique n'est pas exploitée lors de l'étape S1. L'étape S1 se caractérise par le fait que seul l'objectif de régulation mécanique est pris en compte et aucune commande en découle pour le moteur thermique qui est alors indirectement commandé par un contrôleur de ralenti.

Dans la première étape, le procédé de l'invention consiste à produire un signal intermédiaire de commande $u_0$. Pour effectuer cette étape de contrôle mécanique, le procédé de l'invention consiste à tenir compte des estimations des couples des machines. électriques du variateur, de la valeur précédente du signal de commande mécanique estimée au pas précédent de calcul ainsi que d'un signal de commande énergétique $u_w$.

Puis, dans une seconde étape S2, le procédé de l'invention consiste à produire un signal de commande énergétique $u_w$, une correction du signal de commande mécanique $u_0(n)$, des estimations des couples des machines électriques du variateur $^{\wedge}T_{e1}$ et $^{\wedge}T_{e2}$ ainsi que des signaux de consigne des couples des machines électriques $T_{e1}{}^{\#}$ et $T_{e2}{}^{\#}$ qui seront réellement appliqués aux contrôleurs 14 et 15. Pour effectuer cette étape de contrôle énergétique, le procédé de l'invention consiste à tenir compte, en plus des signaux de mesure des grandeurs mesurées dans le vecteur Z (Figure 19) des capteurs du système, du signal intermédiaire de commande $u_0$, calculé lors de l'étape de contrôle mécanique précédente.

Lors d'une étape S3, on réalise un test de fin de boucle pour déterminer si le contrôle de l'invention se termine lorsqu'une décision de fin de mode d'entraînement en mode « rampage en vitesse » a été prise.

Si le test est « OUI », une étape de Fin S5 est exécutée pour relâcher le contrôle.

Si le test S3 est « NON », le contrôle reste dans la boucle et une nouvelle mise à jour (étape S4) du vecteur de mesure $Z = (T_{e1}, T_{e2}\,\omega_{e1}, \omega_{e2}, Ucapa)$ est effectuée et le contrôle reprend le début de la boucle à l'étapeS1.

Dans un mode préféré de réalisation, l'étape S1 est subdivisée en trois étapes successives qui sont :

- une étape S11 au cours de laquelle on acquiert l'estimation des régimes des deux machines électriques soit $^{\wedge}\omega_{e1}$ et $^{\wedge}\omega_{e2}$ ;
- une étape S12 de production d'une valeur (v1) qui est obtenue en appliquant une fonction de régulation prédéterminée, qui peut être réalisée à l'aide des fonctions de régulation disponibles dans l'état de la technique selon une relation de la forme : (v1) = Regul($\omega$wh*), qui dépend de la valeur mesurée du régime des roues $\omega$wh* ;
- une étape S13 de production d'une valeur (u0) qui est obtenue en appliquant une fonction de découplage prédéterminée, qui peut être réalisée à l'aide des fonctions de découplage disponibles dans l'état de la technique selon - une relation de la forme : (u0) = Découplage (v1) qui dépend de la valeur v1 calculée à l'étape S12.

Dans un mode préféré de réalisation, l'étape S2 est subdivisée en trois étapes successives qui sont :

- une étape S21 de production d'un signal intermédiaire de commande énergétique $u_w$ sur la base d'une fonction prédéterminée f() enregistrée ou programmée au préalable et qui dépend de la tension mesurée aux bornes de l'élément tampon d'énergie selon une relation de la forme uw = f(Ucapa) ;
- une étape S22 au cours de laquelle un vecteur d'estimation des couples positifs ou négatifs présents sur les arbres de rotation des deux machines électriques ainsi qu'une estimation de leurs perturbations est déterminée sur la base d'une fonction prédéterminée g() enregistrée ou programmée au préalable et qui dépend des consignes et des valeurs mesurées de couples des machines électriques selon une relation de la forme $(^{\wedge}T_{e1}, {}^{\wedge}T_{e2}, {}^{\wedge}Td_{e1}, {}^{\wedge}Td_{e2}) = g(T_{e1}\#, T_{e2}\#, T_{e1}, T_{e2})$ ;
- une étape S23 au cours de laquelle un vecteur de valeurs de consigne des couples des machines électriques du variateur est calculé sur la base d'une fonction prédéterminée Découplage_Energ() enregistrée ou programmée au préalable qui réalise la fonction connue de l'homme de métier de découplage mais qui l'exécute seulement dans l'objectif de régulation énergétique à la différence de la fonction Découplage() de l'étape S13, et qui dépend du signal de commande énergétique $u_w$ calculé lors de l'étape S21, du signal de commande mécanique $u_0$, calculé lors de l'étape précédente S13, et des estimations des régimes et des perturbations de couples des deux machines électriques du variateur selon une relation de la forme : $(T_{e1}\#, T_{e2}\#) = Decouplage\_Energ(uw, u0, {}^{\wedge}\omega_{e1}, {}^{\wedge}\omega_{e2}, {}^{\wedge}Td_{e1}, {}^{\wedge}Td_{e2})$.

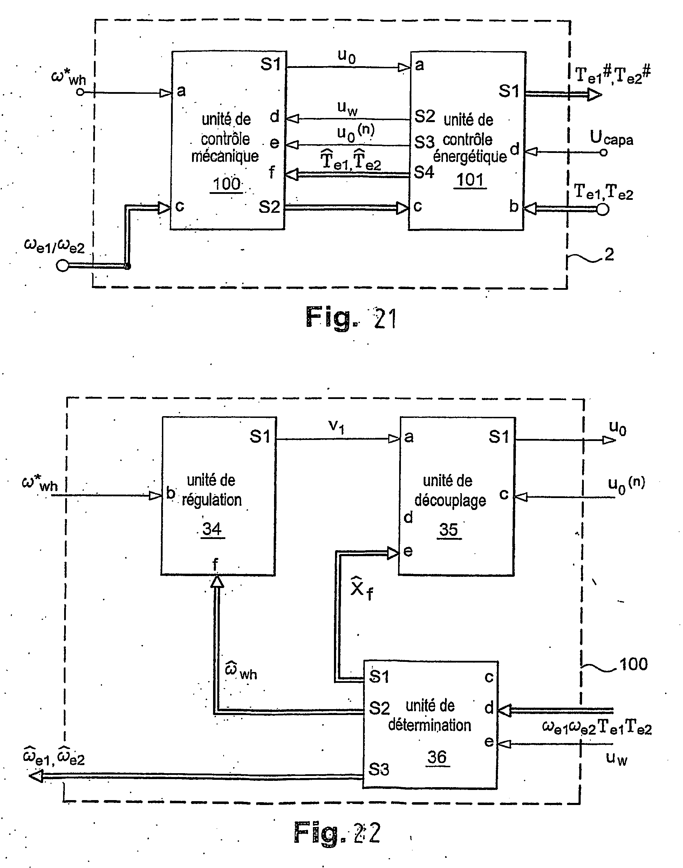

Le contrôleur de troisième niveau, partie du dispositif de commande 2 (voir figure 19) et qui est représenté à la figure 21, comporte :

- une unité de contrôle mécanique 100 ;
- une unité de contrôle énergétique 101.

L'unité de contrôle mécanique 100 comporte cinq portes d'entrée qui sont respectivement :

- une porte a pour recevoir une valeur de consigne de régime ou vitesse de rotation des roues $\omega$wh*;
- une porte c qui reçoit la mesure des vitesses dé rotation des machines électriques $\omega_{e1}$ et $\omega_{e2}$ ;
- une porte d connectée à l'unité de contrôle énergétique 101 pour recevoir le signal de commande énergétique $u_w$,
- une porte e connectée à l'unité de contrôle énergétique 101 pour recevoir une valeur précédente du signal de commande mécanique u0(n) ;
- une porte f connectée à l'unité de contrôle énergétique 101 pour recevoir les estimations des couples des machines électriques $^\wedge T_{e1}$ et $^\wedge T_{e2}$.

L'unité de contrôle mécanique 100 comporte deux portes de sortie qui sont respectivement :

- une porte S1 pour fournir le signal de commande mécanique $u_0$ à destination de l'unité de contrôle énergétique 101 ;
- une porte S2 qui fournit les estimations des régimes des deux machines électriques $^\wedge\omega_{e1}$ et $^\wedge\omega_{e2}$ à destination de l'unité de contrôle énergétique 101.

L'unité de contrôle énergétique 101 comporte quatre portes d'entrée qui sont respectivement :

- une porte a connectée à la sortie S1 de l'unité de contrôle mécanique 100 ;
- une porte b qui reçoit la mesure des couples des machines électriques $T_{e1}$ et $T_{e2}$ ;
- une porte c connectée à la sortie S2 de l'unité de contrôle mécanique 100 pour recevoir les estimations des régimes des machines électriques $^\wedge\omega_{e1}$ et $^\wedge\omega_{e2}$ ;
- une porte d qui reçoit la mesure de la tension aux bornes de l'élément tampon d'énergie du variateur électrique de la transmission.

L'unité de contrôle énergétique 101 comporte quatre portes de sortie qui sont respectivement :

- une porte S1 qui fournit les consignes de couple des machines électriques $T_{e1}{}^\#$ et $T_{e2}{}^\#$;
- une porte S2 connectée à la porte d'entrée d de l'unité de contrôle mécanique 100 pour lui fournir le signal de commande énergétique $u_w$ ;
- une porte S3 connectée à la porte d'entrée e de l'unité de contrôle mécanique 100 pour lui fournir une correction u0(n) du signal de commande mécanique $u_0$ ;
- une porte S4 connectée à la porte d'entrée f de l'unité de contrôle mécanique 100 pour lui fournir une estimation des valeurs de couple des machines électriques $^\wedge T_{e1}$ et $^\wedge T_{e2}$.

A la Figure 22, on a représenté un mode particulier de réalisation des principales unités composant l'unité de contrôle mécanique 100 du contrôleur 2 (Figure 19) de troisième niveau COS qui sont :

- une unité de détermination 36 des variables décrivant l'état du système,
- une unité de régulation 34, et
- une unité de découplage 35.

Le paramétrage de ces unités repose sur un modèle de comportement du véhicule, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités, tels que décrits à l'aide des figures 1 et 2.

L'unité de régulation 34 comporte deux portes d'entrée :

- Une porte d'entrée b recevant un signal représentatif de la valeur optimale de régime à la roue $\omega$wh* ;
- Une porte d'entrée f recevant un signal représentatif d'une estimation de la valeur de régime à la roue $^\wedge\omega$wh.

L'unité de régulation 34 comporte une porte de sortie S1 de signal de commande intermédiaire v1.

L'unité de découplage 35 comporte trois portes d'entrée :

- Une porte d'entrée a recevant le signal de commande intermédiaire v1 issu de la sortie S1 de l'unité de régulation 34 ;

- Une porte d'entrée c recevant la correction du signal de commande mécanique u0(n) ;
- une porte d'entrée e recevant un signal d'estimation d'un vecteur $X_f$.

L'unité de découplage 35 comporte une porte de sortie S1 qui fournit un signal de commande mécanique u0 ;

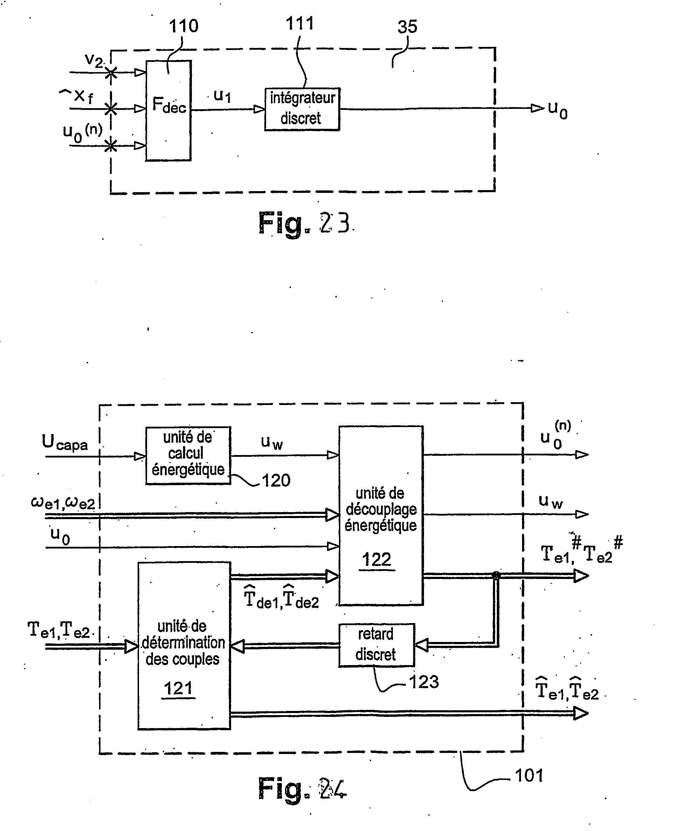

Un mode particulier de réalisation de l'unité de découplage 35 a été représenté à la figure 23 qui sera décrite plus loin.

L'unité de détermination 36 de l'estimation ^Xf a pour rôle de construire le signal d'estimation ^Xf contenant les principales variables décrivant l'état du système.

L'unité de détermination 36 comporte deux portes d'entrée :

- Une porte d'entrée d recevant un vecteur caractérisant l'état électrique des machines électriques $\omega_{e1}$, $\omega_{e2}$, $T_{e1}$, $T_{e2}$ ;
- Une porte d'entrée e recevant le signal de commande énergétique $u_w$.

L'unité de détermination 36 comporte trois portes de sortie qui sont :

- Une porte de sortie S1 qui produit un signal d'estimation sous forme d'un vecteur ^Xf transmis à la porte d'entrée e de l'unité de découplage 35 ;
- Une porte de sortie S2 qui produit une estimation du régime moteur ^$\omega_{wh}$, transmis à la porte d'entrée f de l'unité de régulation 34 ;
- Une porte de sortie S3 qui produit des valeurs d'estimation des régimes de rotation des deux machines électriques.

A la figure 23, on a représenté un mode particulier de réalisation d'un circuit permettant de réaliser le calcul du signal de commande mécanique u0.

Le circuit 35 de découplage de la commande mécanique comporte un premier circuit 110 qui exécute l'opération d'inversion du modèle par dérivations successives. Le circuit 110 reçoit trois paramètres d'entrée qui sont respectivement :

- le signal de commande intermédiaire v1 ;
- l'estimation ^Xf du vecteur Xf ;
- la valeur antérieure du signal de commande mécanique u0(n).

Le circuit 110 produit de la manière qui a été rappelée ci-dessus un signal intermédiaire de commande u1 qui est fourni à l'entrée d'un circuit intégrateur discret 111 pour produire le signal de commande mécanique u0.

À la figure 24, on a représenté un mode particulier de réalisation d'une unité de contrôle énergétique 101 telle qu'elle est représentée à la figure 21.

Le procédé de l'invention, ainsi qu'il a été définie ci-dessus, comporte une étape de calcul d'un signal de commande énergétique $u_w$ qui s'exécute en trois étapes successives.

Dans une première étape, une unité de calcul énergétique 120 produit une première estimation du signal de commande énergétique $u_w$ sur la base de la tension mesurée aux bornes de l'élément tampon d'énergie Ucapa.

Dans une seconde étape 121, on estime les couples $T_{e1}$ et $T_{e2}$ des machines électriques et leurs perturbations.

Dans une troisième étape 122, qui doit être réalisée après l'exécution des première et seconde étapes 120 et 121, le procédé de l'invention consiste à réaliser un découplage énergétique. Le découplage énergétique est effectué par un algorithme particulier, sur la base de la première estimation du signal de commande énergétique uw produite lors de l'étape 120, des estimations des perturbations ^$T_{de1}$ et ^$T_{de2}$ des couples des machines électriques, des estimations des vitesses de rotation des machines électriques et du signal de commande mécanique. L'opération de découplage énergétique produit en sortie :

- un signal de commande mécanique corrigé u ;
- un signal de commande énergétique $u_w$ ;
- des consignes de couple des machines électriques $T_{e1}^{\#}$, $T_{e2}^{\#}$.

L'unité de découplage énergétique 122 comporte un moyen pour produire un vecteur de commande des couples des machines électriques tout en assurant l'absence de perturbation du contrôle énergétique par le contrôle mécanique. Ce moyen d'isolement des contrôles mécanique et énergétique est réalisé par une unité de calcul de la relation :

$$Te^{\#} = AA \cdot u - {}^{\wedge}Tde$$

dans laquelle :

Te$^{\#}$ est un vecteur qui rassemble les deux consignes de couple des machines électriques représenté par $\begin{bmatrix} T_{e1}^{\#} \\ T_{e2}^{\#} \end{bmatrix}$ ;

AA est une matrice carrée qui est représentée par : $\begin{bmatrix} -\dfrac{\omega_{e1}}{\omega_{e1}^2 + \omega_{e2}^2} & -\dfrac{\omega_{e2}}{\Omega} \\ -\dfrac{\omega_{e2}}{\omega_{e1}^2 + \omega_{e2}^2} & \dfrac{\omega_{e1}}{\Omega} \end{bmatrix}$ matrice dans laquelle $\Omega$ est un

paramètre de réglage obtenue par essais sur véhicule ;

u est un vecteur qui rassemble les deux signaux de consigne mécanique et énergétique représenté par : $\begin{bmatrix} u_w \\ u_0 \end{bmatrix}$ ;

Tde est un vecteur qui rassemble les deux estimations des variations de couple des machines électriques, représenté

par : $\begin{bmatrix} \hat{T}_{de1} \\ \hat{T}_{de2} \end{bmatrix}$ .

**Revendications**

1. Procédé de commande d'un groupe motopropulseur de véhicule comportant un moteur thermique couplé directement aux roues du véhicule et une transmission infiniment variable à variateur électrique incluant deux machines électriques, selon lequel le véhicule peut être entraîné par le groupe motopropulseur, freiné par celui-ci, découplé de celui-ci ou maintenu à l'arrêt, **caractérisé en ce qu'**il consiste, dans un mode d'entraînement spécifique du véhicule par le groupe motopropulseur,

   - dans une première étape à calculer le couple du moteur thermique (Tice#) et, en régulant simultanément le couple aux roues et le régime du moteur thermique, à produire un signal de commande mécanique (u0) représentatif de caractéristiques mécaniques estimées ; puis
   - dans une seconde étape à calculer les couples (Te1# ; Te2#) des première et seconde machines électriques sur la base dudit signal de commande mécanique et à produire un signal de commande énergétique régulant le niveau d'énergie ;

   en exploitant uniquement une mesure du niveau de charge de l'élément tampon d'énergie électrique (Ucapa) et des mesures de régime ($\omega_e1$, $\omega_e2$) et ($T_e1$, $T_e2$) de couple fournies par les machines électriques (M$_{e1}$ 11, M$_{e2}$ 12), et **en ce que** le mode d'entraînement spécifique permet d'assurer la régulation de ralenti du moteur thermique tout en contrôlant le couple (To) fourni par le groupe motopropulseur.

2. Procédé selon la revendication 1, **caractérisé en ce que** la première étape du procédé comporte les étapes suivantes :

   - détermination du couple à la roue (To), des régimes de machines électriques du variateur (21) et du régime du moteur thermique ($\omega_{ice}$),
   - obtention de valeurs intermédiaires (v1, v2) par régulation du couple à la roue et du régime moteur thermique déterminés en fonction des valeurs de consigne, et
   - découplage des valeurs intermédiaires (v1, v2) en signal de commande mécanique (u0) et en signal de commande (T$_{ice}$#) du moteur thermique (4).

**3.** Procédé de commande selon la revendication 1 ou 2, **caractérisé en ce que** la seconde étape du procédé comporte les étapes suivantes :

- calcul d'un signal de commande énergétique (uw) sur la base de la mesure de la tension de l'élément tampon d'énergie du variateur électrique (21) ;
- détermination des couples (^Te1 ; ^Te2) des première et seconde machines électriques du variateur (21) et leurs facteurs de correction (^Tde1, ^Tde2) sur la base de la mesure des couples et des signaux de commande (Te1#, Te2#) des machines électriques lors d'une période précédente ;
- découplage énergétique du signal de commande énergétique et du signal de commande mécanique (u0) produit lors de ladite première étape sur la base des régimes déterminés et des facteurs de correction des deux machines électriques du variateur (21).

**4.** Procédé selon la revendication 3, **caractérisé en ce que,** dans la première étape, l'étape de détermination exploite le signal de commande énergétique (uw) calculée lors de ladite seconde étape dans une période précédente, et l'étape de découplage des signaux intermédiaires exploite des valeurs déterminées de :

- régimes ($\omega_e1$, $\omega_e2$) des machines électriques (($M_{e1}$, 11, $M_{e2}$, 12),
- régime ($\omega_{ice}$) du moteur thermique (4),
- couple appliqué ($T_{ice}$) sur le vilebrequin du moteur thermique (4),
- signal de commande mécanique (uo(n)) corrigé lors de l'étape de découplage énergétique à ladite seconde étape dans une période précédente,
- facteurs de correction des couples appliqués sur les rotors des machines électriques,
- facteurs de correction des couples appliqués sur le vilebrequin et sur les roues.

**5.** Procédé de commande selon l'une des revendications 1 à 4, **caractérisé en ce qu'**il consiste, dans un mode d'entraînement spécifique du véhicule par le groupe motopropulseur,

- une première étape, en régulant le régime du moteur thermique, à produire un signal de commande mécanique (u0) représentatif de caractéristiques mécaniques estimées puis
- dans une seconde étape à calculer les couples (Te1# ; Te2#) des première et seconde machines électriques sur la base dudit signal de commande mécanique et à produire un signal de commande énergétique régulant le niveau d'énergie :

en exploitant uniquement une mesure du niveau de charge de l'élément tampon d'énergie électrique (Ucapa) et des mesures de régime (($\omega_e1$, $\omega_e2$) et ($T_{e1}$, $T_{e2}$) de couple fournies par les machines électriques (($M_{e1}$ 11, $M_{e2}$ 12).

**6.** Procédé selon la revendication 5, **caractérisé en ce que** la première étape du procédé comporte les étapes suivantes :

- détermination des régimes de machines électriques du variateur (21) et du régime moteur thermique ($\omega_{ice}$),
- obtention d'une valeur intermédiaire (v1) par régulation du régime moteur thermique déterminé en fonction d'une valeur de consigne, et
- découplage de la valeur intermédiaire (v1) en signal de commande mécanique (u0).

**7.** Procédé de commande selon la revendication 5 ou 6, **caractérisé en ce que** la seconde étape du procédé comporte les étapes suivantes :

- calcul d'un signa de comma de énergétique (uw) sur la base de la mesure de la tension de l'élément tampon d'énergie du variateur électrique (21) ;
- détermination des couples (^Te1 ; ^Te2) des première et seconde machines électriques du variateur (21) et leurs facteurs de correction (^Tde1, ^Tde2) sur la base de la mesure des couples et des signaux de commande (Te1#, Te2#) des machines électriques lors d'une période précédente ;
- découplage énergétique du signal de commande énergétique (uw) et du signal de commande mécanique (u0) produit lors de ladite première étape sur la base des régimes déterminés et des facteurs de correction des deux machines électriques du variateur (21).

**8.** Procédé selon la revendication 7, **caractérisé en ce que,** dans la première étape, l'étape de détermination exploite le signal de commande énergétique (uw) calculée lors de ladite seconde étape dans une période précédente, et l'étape de découplage des signaux intermédiaires exploite des valeurs déterminées de :

- régimes (($\omega_e$1, $\omega_e$2) des machines électriques ($M_{e1}$, 11 ; $M_{e2}$, 12),
- couple appliqué ($T_{ice}$) sur le vilebrequin du moteur thermique (4),
- signal de commande mécanique (uo(n)) corrigé lors de l'étape de découplage énergétique à ladite seconde étape dans une période précédente,
- facteurs de correction des couples appliqués sur le vilebrequin et sur les roues.

**9.** Procédé de commande selon l'une des revendications précédentes, **caractérisé en ce qu'**il consiste, dans un mode d'entraînement spécifique du véhicule par le groupe motopropulseur,

- dans une première étape, en régulant le couple aux roues, à produire un signal de commande mécanique (u0) représentatif de caractéristiques mécaniques estimées ; puis
- dans une seconde étape, à calculer les couples (Te1#, Te2#) des première et seconde machines électriques sur la base dudit signal de commande mécanique (u0) et à produire un signal de commande énergétique (uw) régulant le niveau d'énergie ;

en exploitant uniquement une mesure du niveau de charge de l'élément tampon d'énergie électrique (Ucapa) et des mesures de régime ($\omega_{e1}$, $\omega_e$2) et ($T_{e1}$, $T_{e2}$) de couple fournies par les machines électriques ($M_{e1}$, 11, $N_{e2}$, 12).

**10.** Procédé selon la revendication 9, **caractérisé en ce que** le mode d'entraînement spécifique permet d'annuler le couple fourni par le groupe motopropulseur en dissipant l'énergie fournie par le moteur thermique.

**11.** Procédé selon la revendication 9 ou 10, **caractérisé en ce que** la première étape du procédé comporte les étapes suivantes :

- détermination du couple à la roue (To) et des régimes de machines électriques du variateur (21),
- obtention d'une valeur intermédiaire (v2) par régulation du couple à la roue déterminé en fonction d'une valeur de consigne, et
- découplage de la valeur intermédiaire (v2) en signal de commande mécanique (u0).

**12.** rocédé de commande selon la revendication 9 ou 10, **caractérisé en ce que** la seconde étape du procédé comporte les étapes suivantes :

- calcul d'un signal de commande énergétique (uw) sur la base de la mesure de la tension de l'élément tampon d'énergie du variateur électrique (21) ;
- détermination des couples (^Te1 ; ^Te2) des première et seconde machines électriques du variateur (21) et de leurs facteurs de correction (^Tde1, ^Tde2) sur la base de la mesure des couples et des signaux de commande (Te1#, Te2#) des machines électriques lors d'une période précédente ;
- découplage énergétique du signal de commande énergétique (uw) et du signal de commande mécanique (u0) produit lors de ladite première étape sur la base des régimes déterminés et des facteurs de correction des deux machines électriques du variateur (21).

**13.** Procédé selon la revendication 12, **caractérisé en ce que**, dans la première étape, l'étape de détermination exploite le signal de commande énergétique (uw) calculée lors de ladite seconde étape dans une période précédente, et l'étape de découplage des signaux intermédiaires exploite des valeurs déterminées de :

- régimes ($\omega_e$1, $\omega_e$2) des machines électriques ($M_{e1}$, 11 ; $M_{e2}$, 12),
- couple appliqué ($T_{ice}$) sur le vilebrequin du moteur thermique (4),
- signal de commande mécanique (uo(n)) corrigé lors de l'étape de découplage énergétique à ladite seconde étape dans une période précédente,
- facteurs de correction des couples appliqués sur les rotors des machines électriques,
- facteurs de correction des couples appliqués sur le vilebrequin et sur les roues.

**14.** Procédé de commande selon l'une des revendications 1 à 13, **caractérisé en ce qu'**il consiste, dans un mode d'entraînement spécifique du véhicule par le groupe motopropulseur,

- dans une première étape, en régulant la vitesse de rotation aux roues, à produire un signal de commande mécanique (u0) représentatif de caractéristiques mécaniques estimées ; puis
- dans une seconde étape, à calculer les couples ($T_{e1}$#, $T_{e2}$#) des première et seconde machines électriques sur la base dudit signal de commande mécanique (u0) et à produire un signal de commande énergétique (uw) régulant le niveau d'énergie ;

en exploitant uniquement une mesure du niveau de charge de l'élément tampon d'énergie électrique (Ucapa) et des mesures de régime ($\omega_e$1, $\omega_e$2) et ($T_{e1}$, $T_{e2}$) de couple fournies par les machines électriques ($M_{e1}$, 11, $M_{e2}$, 12).

**15.** Procédé selon la revendication 14, **caractérisé en ce que** le mode d'entraînement spécifique permet d'annuler la vitesse du véhicule en dissipant l'énergie fournie par le moteur thermique.

**16.** Procédé selon la revendication 14 ou 15, **caractérisé en ce que** la première étape du procédé comporte les étapes suivantes :

détermination de la vitesse de rotation des roues et des régimes de machines électriques du variateur (21),
- obtention d'une valeur intermédiaire (v1) par régulation de la vitesse de rotation des roues ($\omega$wh) déterminé en fonction d'une valeur de consigne, et
- découplage de la valeur intermédiaire (v1) en signal de commande mécanique (u0).

**17.** Procédé de commande selon la revendication 14 ou 15, **caractérisé en ce que** la seconde étape du procédé comporte les étapes suivantes :

- calcul d'un signal de commande énergétique (uw) sur la base de la mesure de tension de l'élément tampon d'énergie du variateur électrique (21) ;
- détermination des couples (^Te1, ^Te2) des première et seconde machines électriques du variateur (21) et leurs facteurs de correction (^Tde1, ^Tde2) sur la base de la mesure des couples et des signaux de commande (Te1#, Te2#) des machines électriques lors d'une période précédente :
- découplage énergétique du signal de commande énergétique (uw) et du signal de commande mécanique (u0) produit lors de ladite première étape sur la base des régimes déterminés et des facteurs de correction des deux machines électriques du variateur (21).

**18.** Procédé selon la revendication 17, **caractérisé en ce que,** dans la première étape, l'étape de détermination exploite le signal de commande énergétique (uw) calculé lors de ladite seconde étape dans une période précédente, et l'étape de découplage des signaux intermédiaires exploite des valeurs déterminées de :

- régimes ($\omega_e$1, $\omega_e$2) des machines électriques ($M_{e1}$, 11 ; $M_{e2}$, 12),
- couple appliqué ($T_{ice}$) sur le vilebrequin du moteur thermique (4),
- signal de commande mécanique (uo(n)) corrigé lors de l'étape de découplage énergétique à ladite seconde étape dans une période précédente,
- facteurs de correction des couples appliqués sur les rotors des machines électriques,
- facteurs de correction des couples appliqués sur les roues.

**19.** Dispositif de commande des actionneurs d'un groupe motopropulseur pour mettre en oeuvre le procédé selon l'une des revendications 1 à 18, le dispositif étant du genre comportant :

- un premier contrôleur (20) pour interpréter la volonté du conducteur,
- un second contrôleur (22) pour déterminer un point de fonctionnement optimal du moteur thermique, et
- un troisième contrôleur (25) pour produire des signaux de commande des actionneurs du groupe motopropulseur,

**caractérisé en ce que** le troisième contrôleur (25) comporte :

- une unité de contrôle mécanique (100) pour produire un signal de commande mécanique (u0) représentatif de caractéristiques mécaniques ;
- une unité de contrôle énergétique (101) connectée à l'unité de contrôle mécanique pour produire des consignes de couple des machines électriques du variateur électrique de la transmission infiniment variable.

**20.** Dispositif de commande selon la revendication 19, **caractérisé en ce que** le signal mécanique (u0) est représentatif des caractéristiques mécaniques estimées.

**21.** Dispositif de commande selon la revendication 19 ou 20, **caractérisé en ce que** l'unité de découplage (35) de l'unité de contrôle mécanique (100) comporte :

- un module (110) de découplage non linéaire recevant au moins l'un des signaux suivants :

- des valeurs estimées (^Xf) d'état du groupe motopropulseur, des valeurs de signaux de commande intermédiaire (v1, v2) obtenues par régulation sur la base d'un point de consigne d'état du .groupe moto-propulseur (To*, $\omega_{ice}$*) et d'estimation de ces dites valeurs de consigne ;
- une valeur calculée d'un signal de commande mécanique (uo(n)) lors d'une étape précédente lors de l'établissement d'un signal de commande énergétique ;

ledit module (110) produisant un premier signal intermédiaire (u1) dérivé de commande mécanique et un second signal intermédiaire (u2) ;
- un module (111) appliquant au premier signal dérivé (u1) une intégration discrète pour produire une valeur de signal de commande mécanique (u0) ;
- une module (112) appliquant à la seconde sortie du module (110) une saturation en fonction du régime estimé du moteur thermique (^$\omega_{ice}$) ;
- un circuit (113) appliquant un retard au signal de sortie du circuit de saturation (112) de façon à produire un signal de commande de couple ($T_{ice}$#) du moteur thermique.

**22.** Dispositif de commande selon la revendication 19 ou 20, **caractérisé en ce que** l'unité de découplage (35) de l'unité de contrôle mécanique (100) comporte :

- un module (110) de découplage non linéaire recevant au moins l'un des signaux suivants :

- des valeurs estimées (^Xf) d'état du groupe motopropulseur,
- des valeurs d'un signal de commande intermédiaire (v1) obtenues par régulation sur la base d'un point de consigne d'état du moteur thermique ($\omega_{ice}$*) et d'estimation de ladite valeur de consigne ;
- une valeur calculée d'un signal de commande mécanique (uo(n)) lors d'une étape précédente lors de l'établissement d'un signal de commande énergétique ;

ledit module (110) produisant un signal intermédiaire (u1) dérivé de commande mécanique ,
- un module (111) rappliquant au signal dérivé (u1) une intégration discrète pour produire une valeur de signal de commande mécanique (u0).

**23.** Dispositif de commande selon la revendication 19 ou 20, **caractérisé en ce que** l'unité de découplage (35) de l'unité de contrôle mécanique (100) comporte :

- un module (110) de découplage non linéaire recevant au moins l'un des signaux suivants :

- des valeurs estimées (^Xf) d'état du groupe motopropulseur,
- la valeur d'un signal de commande intermédiaire (v2) obtenue par régulation sur la base d'un point de consigne d'état du couple aux roues (To*) et d'estimation de ladite valeur de consigne ;
- une valeur calculée d'un signal de commande mécanique (uo(n)) lors d'une étape précédente lors de l'établissement d'un signal de commande énergétique ;

ledit module (110) produisant un signal intermédiaire (u1) dérivé de commande mécanique ;
- un module (111) appliquant au signal dérivé (u1) une intégration discrète pour produire une valeur de signal de commande mécanique (u0).

**24.** Dispositif de commande selon la revendication 19 ou 20, **caractérisé en ce que** l'unité de découplage (35) de l'unité de contrôle mécanique (100) comporte :

- un module (110) de découplage non linéaire recevant au moins l'un des signaux suivants :

- des valeurs estimées (^Xf) d'état du groupe motopropulseur,
- la valeur d'un signal de commande intermédiaire (v1) obtenue par régulation sur la base d'un point de consigne de vitesse des roues ($\omega$wh*) et d'estimation de ladite valeur de consigne ;
- une valeur calculée d'un signal de commande mécanique (uo(n)) lors d'une étape précédente lors de l'établissement d'un signal de commande énergétique ;

ledit module (110) produisant un signal intermédiaire (u1) dérivé de commande mécanique ;
- un module (111) appliquant au signal dérivé (u1) une intégration discrète pour produire une valeur de signal de commande mécanique (u0).

**Claims**

1. Method for controlling a vehicle drive train comprising an internal combustion engine directly coupled to the wheels of the vehicle and an infinitely variable transmission with electric variator including two electric machines, according to which method the vehicle may be driven by the drive train, braked by the latter, decoupled from the latter or kept stationary, **characterized in that** it consists, in a specific mode of driving of the vehicle by the drive train,

   - in a first step in computing the torque of the internal combustion engine (Tice#) and, by simultaneously regulating the torque to the wheels and the speed of the internal combustion engine, in generating a mechanical control signal (u0) representative of estimated mechanical characteristics; then
   - in a second step, in computing the torques (Te1#; Te2#) of the first and second electric machines on the basis of the said mechanical control signal and in generating an energy control signal regulating the level of energy; by exploiting only one measurement of the level of load of the electric energy buffer element (Ucapa) and measurements of speed ($\omega_e1$, $\omega_e2$) and ($T_e1$, $T_e2$) of torque supplied by the electric machines ($M_{e1}$ 11, $M_{e2}$ 12),

   and **in that** the specific drive mode makes it possible to regulate the idling of the internal combustion engine while controlling the torque (To) supplied by the drive train.

2. Method according to Claim 1, **characterized in that** the first step of the method comprises the following steps:

   - determination of the torque to the wheel (To), of the electric machine speeds of the variator (21) and of the speed of the internal combustion engine ($\omega_{ice}$),
   - obtaining intermediate values (v1, v2) by regulating the torque to the wheel and the internal combustion engine speed determined as a function of the set point values, and
   - decoupling of the intermediate values (v1, v2) as a mechanical control signal (u0) and as a control signal ($T_{ice}$#) of the internal combustion engine (4).

3. Control method according to Claim 1 or 2, **characterized in that** the second step of the method comprises the following steps:

   - computing an energy control signal (uw) on the basis of the measurement of the voltage of the energy buffer element of the electric variator (21),
   - determination of the torques (^Te1; ^Te2) of the first and second electric machines of the variator (21) and their correction factors (^Tde1, ^Tde2) on the basis of the measurement of the torques and of the control signals (Te1#, Te2#) of the electric machines during a previous period;
   - energy decoupling of the energy control signal and of the mechanical control signal (u0) generated during the said first step on the basis of the determined speeds and of the correction factors of the two electric machines of the variator (21).

4. Method according to Claim 3, **characterized in that,** in the first step, the determination step exploits the energy control signal (uw) computed during the said second step in a previous period, and the step of decoupling the intermediate signals exploits determined values of:

   - speeds ($\omega_e1$, $\omega_e2$) of the electric machines ($M_{e1}$, 11, $M_{e2}$, 12),
   - speed ($\omega_{ice}$) of the internal combustion engine (4),
   - torque applied ($T_{ice}$) to the crankshaft of the internal combustion engine (4),
   - mechanical control signal (uo(n)) corrected during the step of energy decoupling to the said second step in a previous period,
- factors of correction of the torques applied to the rotors of the electric machines,
- factors of correction of the torques applied to the crankshaft and to the wheels.

5. Control method according to one of Claims 1 to 4, **characterized in that** it consists, in a specific mode of driving of the vehicle by the drive train,

- in a first step, by regulating the speed of the internal combustion engine, in generating a mechanical control signal (u0) representative of estimated mechanical characteristics, then,
- in a second step in computing the torques (Te1#; Te2#) of the first and second electric machines on the basis of the said mechanical control signal and in generating an energy control signal regulating the energy level:

by exploiting only one measurement of the level of load of the electric energy buffer element (Ucapa) and of the measurements of speed ($\omega_e 1$, $\omega_e 2$) and ($T_{e1}$, $T_{e2}$) of torque supplied by the electric machines ($M_{e1}$ 11, $M_{e2}$ 12).

6. Method according to Claim 5, **characterized in that** the first step of the method comprises the following steps:

- determination of the speeds of electric machines of the variator (21) and of the internal combustion engine speed ($\omega_{ice}$),
- obtaining an intermediate value (v1) by regulation of the internal combustion engine speed determined according to a set point value, and
- decoupling the intermediate value (v1) as a mechanical control signal (u0).

7. Control method according to Claim 5 or 6, **characterized in that** the second step of the method comprises the following steps:

- computing an energy control signal (uw) on the basis of the measurement of the voltage of the energy buffer element of the electric variator (21);
- determination of the torques (^Tel; ^Te2) of the first and second electric machines of the variator (21) and their correction factors (^Tde1, ^Tde2) on the basis of the measurement of the torques and of the control signals (Te1#, Te2#) of the electric machines during a previous period;
- energy decoupling of the energy control signal (uw) and of the mechanical control signal (u0) generated during the said first step on the basis of the determined speeds and of the correction factors of the two electric machines of the variator (21).

8. Method according to Claim 7, **characterized in that**, in the first step, the determination step exploits the energy control signal (uw) computed during the said second step in a previous period, and the step of decoupling the intermediate signals exploits determined values of:

- speeds ($\omega_e 1$, $\omega_e 2$) of the electric machines ($M_{e1}$, 11; $M_{e2}$, 12),
- torque applied ($T_{ice}$) to the crankshaft of the internal combustion engine (4),
- mechanical control signal (uo(n)) corrected during the energy decoupling step to the said second step in a previous period,
- correction factors of the torques applied to the crankshaft and to the wheels.

9. Control method according to one of the preceding claims, **characterized in that** it consists, in a specific mode of driving of the vehicle by the drive train,

- in a first step, by regulating the torque to the wheels, in generating a mechanical control signal (u0) representative of estimated mechanical characteristics; then
- in a second step, in computing the torques (Te1#, Te2#) of the first and second electric machines on the basis of the said mechanical control signal (u0) and in generating an energy control signal (uw) regulating the energy level;

by exploiting only one measurement of the level of load of the electric energy buffer element (Ucapa) and of the measurements of speed ($\omega_e 1$, $\omega_e 2$) and ($T_{e1}$, $T_{e2}$) of torque supplied by the electric machines ($M_{e1}$, 11, $M_{e2}$, 12).

**10.** Method according to Claim 9, **characterized in that** the specific drive mode makes it possible to cancel the torque supplied by the drive train by dissipating the energy supplied by the internal combustion engine.

**11.** Method according to Claim 9 or 10, **characterized in that** the first step of the method comprises the following steps:

- determination of the torque to the wheel (To) and of the speeds of electric machines of the variator (21),
- obtaining an intermediate value (v2) by regulating the torque to the wheel determined according to a set point value, and
- decoupling the intermediate value (v2) as a mechanical control signal (u0).

**12.** Control method according to Claim 9 or 10, **characterized in that** the second step of the method comprises the following steps:

- computing an energy control signal (uw) on the basis of the measurement of the voltage of the energy buffer element of the electric variator (21);
- determination of the torques (^Tel; ^Te2) of the first and second electric machines of the variator (21) and of their correction factors (^Tde1, ^Tde2) on the basis of the measurement of the torques and of the control signals (Te1#, Te2#) of the electric machines during a previous period;
- energy decoupling of the energy control signal (uw) and of the mechanical control signal (u0) generated during the said first step on the basis of the determined speeds and of the correction factors of the two electric machines of the variator (21).

**13.** Method according to Claim 12, **characterized in that**, in the first step, the determination step exploits the energy control signal (uw) computed during the said second step in a previous period, and the step of decoupling the intermediate signals exploits determined values of:

- speeds ($\omega_e 1$, $\omega_e 2$) of the electric machines ($M_{e1}$, 11; $M_{e2}$, 12),
- torque applied ($T_{ice}$) to the crankshaft of the internal combustion engine (4),
- mechanical control signal (uo(n)) corrected during the energy decoupling step to the said second step in a previous period,
- correction factors of the torques applied to the rotors of the electric machines,
- correction factors of the torques applied to the crankshaft and to the wheels.

**14.** Control method according to one of Claims 1 to 13, **characterized in that** it consists, in a specific mode of driving of the vehicle by the drive train,

- in a first step, by regulating the speed of rotation at the wheels, in generating a mechanical control signal (u0) representative of estimated mechanical characteristics; then
- in a second step, in computing the torques ($T_{e1}\#$, $T_{e2}\#$) of the first and second electric machines on the basis of the said mechanical control signal (u0) and in generating an energy control signal (uw) regulating the energy level;

by exploiting only one measurement of the level of load of the electric energy buffer element (Ucapa) and of the measurements of speed ($\omega_e 1$, $\omega_e 2$) and ($T_{e1}$, $T_{e2}$) of torque supplied by the electric machines ($M_{e1}$, 11, $M_{e2}$, 12).

**15.** Method according to Claim 14, **characterized in that** the specific drive mode makes it possible to cancel the speed of the vehicle by dissipating the energy supplied by the internal combustion engine.

**16.** Method according to Claim 14 or 15, **characterized in that** the first step of the method comprises the following steps:

- determination of the speed of rotation of the wheels and of the speeds of electric machines of the variator (21),
- obtaining an intermediate value (v1) by regulating the speed of rotation of the wheels ($\omega$wh) determined according to a set point value, and
- decoupling the intermediate value (v1) as a mechanical control signal (u0).

**17.** Control method according to Claim 14 or 15, **characterized in that** the second step of the method comprises the following steps:

- computing an energy control signal (uw) on the basis of the measurement of voltage of the energy buffer element of the electric variator (21);
- determination of the torques ($\hat{T}e1$; $\hat{T}e2$) of the first and second electric machines of the variator (21) and their correction factors ($\hat{T}de1$, $\hat{T}de2$) on the basis of the measurement of the torques and of the control signals (Te1#, Te2#) of the electric machines during a previous period;
- energy decoupling of the energy control signal (uw) and of the mechanical control signal (u0) generated during the said first step on the basis of the determined speeds and of the correction factors of the two electric machines of the variator (21).

**18.** Method according to Claim 17, **characterized in that,** in the first step, the determination step exploits the energy control signal (uw) computed during the said second step in a previous period, and the step of decoupling the intermediate signals exploits determined values of:

- speeds ($\omega_e 1$, $\omega_e 2$) of the electric machines ($M_{e1}$, 11; $M_{e2}$, 12),
- torque applied ($T_{ice}$) to the crankshaft of the internal combustion engine (4),
- mechanical control signal (uo(n)) corrected during the energy decoupling step to the said second step in a previous period,
- correction factors of the torques applied to the rotors of the electric machines,
- correction factors of the torques applied to the wheels.

**19.** Device for controlling the actuators of a drive train in order to apply the method according to one of Claims 1 to 18, the device being of the type comprising:

- a first controller (20) for interpreting the will of the driver,
- a second controller (22) for determining an optimal operating point of the internal combustion engine, and
- a third controller (25) for generating signals for controlling the actuators of the drive train,

**characterized in that** the third controller (25) comprises:

- a mechanical control unit (100) for generating a mechanical control signal (u0) representative of mechanical characteristics;
- an energy control unit (101) connected to the mechanical control unit to generate torque set points of the electric machines of the electric variator of the infinitely variable transmission.

**20.** Control device according to Claim 19, **characterized in that** the mechanical signal (u0) is representative of the estimated mechanical characteristics.

**21.** Control device according to Claim 19 or 20, **characterized in that** the decoupling unit (35) of the mechanical control unit (100) comprises:

- a non-linear decoupling module (110) receiving at least one of the following signals:

- estimated values ($\hat{X}f$) of the state of the drive train,
- values of intermediate control signals (v1, v2) obtained by regulation on the basis of a set point of the state of the drive train (To*, $\omega_{ice}$*) and of estimation of the said set point values;
- a computed value of a mechanical control signal (uo(n)) during a previous step during the establishment of an energy control signal;

the said module (110) generating a first derivative intermediate signal (u1) of mechanical control and a second intermediate signal (u2);
- a module (111) applying to the first derivative signal (u1) a discrete integration in order to generate a mechanical control signal value (u0);
- a module (112) applying to the second output of the module (110) a saturation according to the estimated speed of the internal combustion engine ($\hat{\omega}_{ice}$);
- a circuit (113) applying a delay to the output signal of the saturation circuit (112) in order to generate a torque control signal ($T_{ice}$#) of the internal combustion engine.

**22.** Control device according to Claim 19 or 20, **characterized in that** the decoupling unit (35) of the mechanical control unit (100) comprises:

- a non-linear decoupling module (110) receiving at least one of the following signals:

- estimated values (^Xf) of the state of the drive train,
- values of an intermediate control signal (v1) obtained by regulation on the basis of a set point of the state of the internal combustion engine ($\omega_{ice}$*) and of estimation of the said set point value;
- a computed value of a mechanical control signal (uo(n)) during a previous step during the establishment of an energy control signal;

the said module (110) generating a derivative intermediate signal (u1) of mechanical control;
- a module (111) applying to the derivative signal (u1) a discrete integration in order to generate a mechanical control signal value (u0).

**23.** Control device according to Claim 19 or 20, **characterized in that** the decoupling unit (35) of the mechanical control unit (100) comprises:

- a non-linear decoupling module (110) receiving at least one of the following signals:

- estimated values (^Xf) of the state of the drive train,
- the value of an intermediate control signal (v2) obtained by regulation on the basis of a set point of the state of the torque to the wheels (To*) and of estimation of the said set point value;
- a computed value of a mechanical control signal (uo(n)) during a previous step during the establishment of an energy control signal;

the said module (110) generating a derivative intermediate signal (u1) of mechanical control;
- a module (111) applying to the derivative signal (u1) a discrete integration in order to generate a mechanical control signal value (u0).

**24.** Control device according to Claim 19 or 20, **characterized in that** the decoupling unit (35) of the mechanical control unit (100) comprises:

- a non-linear decoupling module (110) receiving at least one of the following signals:

- estimated values (^Xf) of the state of the drive train,
- the value of an intermediate control signal (v1) obtained by regulation on the basis of a set point of speed of the wheels ($\omega$wh*) and of estimation of the said set point value;
- a computed value of a mechanical control signal (uo(n)) during a previous step during the establishment of an energy control signal;

the said module (110) generating a derivative intermediate signal (u1) of mechanical control;
- a module (111) applying to the derivative signal (u1) a discrete integration in order to generate a mechanical control signal value (u0).

**Patentansprüche**

**1.** Verfahren zur Steuerung einer Motorantriebseinheit eines Fahrzeugs, umfassend einen Wärmekraftmotor, der direkt an die Räder des Fahrzeugs gekoppelt ist, und ein stufenlos einstellbares Getriebe mit elektrischem Variator, die zwei elektrische Maschinen einschließt, gemäß denen das Fahrzeug von der Motorantriebseinheit angetrieben, von dieser gebremst, von dieser abgeschaltet oder im Stillstand gehalten werden kann, **dadurch gekennzeichnet, dass** es, in einer spezifischen Antriebsart des Fahrzeugs durch die Motorantriebseinheit, darin besteht

- in einem ersten Schritt das Drehmoment des Wärmekraftmotors (Tice#) zu berechnen, und darin, gleichzeitig das Radmoment und die Drehzahl des Wärmekraftmotors zu regulieren, ein mechanisches Steuerungssignal (u0) zu erzeugen, das die ermittelten Drehmoment-Drehzahl-Kennlinien repräsentiert; dann
- in einem zweiten Schritt die Drehmomente (Te1#; Te2#) der ersten und zweiten elektrischen Maschinen auf der Basis des mechanischen Steuerungssignals zu berechnen, und ein energetisches Steuerungssignal zu erzeugen, das das Energieniveau reguliert;

indem ausschließlich eine Messung des Ladungsniveaus des Elektroenergie-Pufferelements (Ucapa) und Drehzahlmessungen ($\omega_{e1}$ $\omega_{e2}$) und ($T_{e1}$, $T_{e2}$) des Drehmoments, das von den elektrischen Maschinen ($M_{e1}$ 11, $M_{e2}$ 12) geliefert wird, genutzt werden;
und **dadurch** dass es die spezifische Antriebsart ermöglicht, die Leerlaufregulierung des Wärmekraftmotors zu gewährleisten und dabei das Drehmoment (To) zu kontrollieren, das von der Motorantriebseinheit geliefert wird.

2. Verfahren nach Anspruch 1, **dadurch gekennzeichnet, dass** der erste Schritt des Verfahrens die folgenden Schritte umfasst:

   - Bestimmen des Radmoments (To), der Drehzahlen der elektrischen Maschinen des Variators (21) und der Drehzahl des Wärmekraftmotors ($\omega_{ice}$)
   - Erhalten der Zwischenwerte (v1, v2) durch Regulierung des Radmoments und der Wärmekraftmotordrehzahl, die in Abhängigkeit von Sollwerten bestimmt werden, und
   - Entkoppeln der Zwischenwerte (v1, v2) in ein mechanisches Steuerungssignal (u0) und ein Steuerungssignal ($T_{ice}$#) des Wärmekraftmotors (4).

3. Verfahren zur Steuerung nach Anspruch 1 oder 2, **dadurch gekennzeichnet, dass** der zweite Schritt des Verfahrens die folgenden Schritte umfasst:

   - Berechnen eines energetischen Steuerungssignals (uw) auf der Basis der Messung der Spannung des Energiepufferelements des elektrischen Variators (21);
   - Bestimmen der Drehmomente (^Te1; ^Te2) der ersten und zweiten elektrischen Maschinen des Variators (21) und ihrer Korrekturfaktoren (^Tde1, ^Tde2) auf der Basis der Messung der Drehmomente und der Steuerungssignale (Te1#, Te2#) der elektrischen Maschinen während eines vorhergehenden Zeitraums;
   - energetisches Entkoppeln des energetischen Steuerungssignals und des mechanischen Steuerungssignals (u0), die während des ersten Schritts auf der Basis der Drehzahlen, die bestimmt wurden, und der Korrekturfaktoren der beiden elektrischen Maschinen des Variators (21) erzeugt wurden.

4. Verfahren nach Anspruch 3, **dadurch gekennzeichnet, dass** im ersten Schritt der Schritt des Bestimmens das energetische Steuerungssignal (uw) nutzt, das während des zweiten Schritts in einem vorhergehenden Zeitraum berechnet wurde, und der Schritt des Entkoppelns der Zwischensignale die Werte nutzt, die bestimmt wurden:

   - der Drehzahlen ($\omega_e1$, $\omega_e2$) der elektrischen Maschinen ($M_{e1}$, 11, $M_{e2}$, 12),
   - der Drehzahl ($\omega_{ice}$) des Wärmekraftmotors (4),
   - des Drehmoments ($T_{ice}$) das auf die Kurbelwelle des Wärmekraftmotors (4) angewendet wird,
   - des mechanischen Steuerungssignals (uo(n)), das während des Schritts der energetischen Entkopplung im zweiten Schritt in einem vorhergehenden Zeitraum korrigiert wurde,
   - der Korrekturfaktoren der Drehmomente, die auf die Rotoren der elektrischen Maschinen angewendet werden,
   - der Korrekturfaktoren der Drehmomente, die auf die Kurbelwelle und auf die Räder angewendet werden.

5. Verfahren zur Steuerung nach einem der Ansprüche 1 bis 4, **dadurch gekennzeichnet, dass** es, in einer spezifischen Antriebsart des Fahrzeugs durch die Motorantriebseinheit, darin besteht

   - in einem ersten Schritt die Drehzahl des Wärmekraftmotors zu regulieren, ein mechanisches Steuerungssignal (u0) zu erzeugen, das die ermittelten Drehmoment-Drehzahl-Kennlinien repräsentiert; dann
   - in einem zweiten Schritt die Drehmomente (Te1#; Te2#) der ersten und zweiten elektrischen Maschinen auf der Basis des mechanischen Steuerungssignals zu berechnen, und ein energetisches Steuerungssignal zu erzeugen, das das Energieniveau reguliert;

indem ausschließlich eine Messung des Ladungsniveaus des Elektroenergie-Pufferelements (Ucapa) und Drehzahlmessungen ($\omega_{e1}$, $\omega_{e2}$) und ($T_{e1}$, $T_{e2}$) des Drehmoments, das von den elektrischen Maschinen ($M_{e1}$ 11, $M_{e2}$ 12) geliefert wird, genutzt werden.

6. Verfahren nach Anspruch 5, **dadurch gekennzeichnet, dass** der erste Schritt des Verfahrens die folgenden Schritte umfasst:

- Bestimmen der Drehzahlen der elektrischen Maschinen des Variators (21) und der Drehzahl des Wärmekraftmotors ($\omega_{ice}$),
- Erhalten eines Zwischenwerts (v1) durch Regulierung der Wärmekraftmotordrehzahl, die in Abhängigkeit von einem Sollwert bestimmt wurde, und
- Entkoppeln des Zwischenwerts (v1) in ein mechanisches Steuerungssignal (u0).

7. Verfahren zur Steuerung nach Anspruch 5 oder 6, **dadurch gekennzeichnet, dass** der zweite Schritt des Verfahrens die folgenden Schritte umfasst:

- Berechnen eines energetischen Steuerungssignals (uw) auf der Basis der Messung der Spannung des Energiepufferelements des elektrischen Variators (21);
- Bestimmen der Drehmomente (^Te1; ^Te2) der ersten und zweiten elektrischen Maschinen des Variators (21) und ihrer Korrekturfaktoren (^Tde1, ^Tde2) auf der Basis der Messung der Drehmomente und der Steuerungssignale (Te1#, Te2#) der elektrischen Maschinen während eines vorhergehenden Zeitraums;
- energetisches Entkoppeln des energetischen Steuerungssignals (uw) und des mechanischen Steuerungssignals (u0), die während des ersten Schritts auf der Basis der bestimmten Drehzahlen und der Korrekturfaktoren der beiden elektrischen Maschinen des Variators (21) erzeugt wurden.

8. Verfahren nach Anspruch 7, **dadurch gekennzeichnet, dass** im ersten Schritt der Schritt des Bestimmens das energetische Steuerungssignal (uw) nutzt, das während des zweiten Schritts in einem vorhergehenden Zeitraum berechnet wurde, und der Schritt des Entkoppelns der Zwischensignale die Werte nutzt, die bestimmt wurden, der:

- Drehzahlen ($\omega_e1$, $\omega_e2$) der elektrischen Maschinen ($M_{e1}$, 11; $M_{e2}$, 12),
- des Drehmoments ($T_{ice}$) das auf die Kurbelwelle des Wärmekraftmotors (4) angewendet wird,
- des mechanischen Steuerungssignals (uo(n)), das während des Schritts der energetischen Entkopplung im zweiten Schritt in einem vorhergehenden Zeitraum korrigiert wurde,
- der Korrekturfaktoren der Drehmomente, die auf die Kurbelwelle und auf die Räder angewendet werden.

9. Verfahren zur Steuerung nach einem der vorhergehenden Ansprüche, **dadurch gekennzeichnet, dass** es, in einer spezifischen Antriebsart des Fahrzeugs durch die Motorantriebseinheit, darin besteht

- in einem ersten Schritt das Radmoment zu regulieren, ein mechanisches Steuerungssignal (u0) zu erzeugen, das die ermittelten Drehmoment-Drehzahl-Kennlinien repräsentiert; dann
- in einem zweiten Schritt die Drehmomente (Te1#; Te2#) der ersten und zweiten elektrischen Maschinen auf der Basis des mechanischen Steuerungssignals (u0) zu berechnen, und ein energetisches Steuerungssignal (uw) zu erzeugen, das das Energieniveau reguliert;

indem ausschließlich eine Messung des Ladungsniveaus des Elektroenergie-Pufferelements (Ucapa) und Drehzahlmessungen ($\omega_{e1}$, $\omega_{e2}$) und ($T_{e1}$, $T_{e2}$) des Drehmoments, das von den elektrischen Maschinen ($M_{e1}$, 11, $M_{e2}$, 12) geliefert wird, genutzt werden.

10. Verfahren nach Anspruch 9, **dadurch gekennzeichnet, dass** es die spezifische Antriebsart ermöglicht, das Drehmoment zurückzunehmen, das von der Motorantriebseinheit geliefert wird, indem die Energie, die von dem Wärmekraftmotor geliefert wird, abgeleitet wird.

11. Verfahren nach Anspruch 9 oder 10, **dadurch gekennzeichnet, dass** der erste Schritt des Verfahrens die folgenden Schritte umfasst:

- Bestimmen des Radmoments (To) und der Drehzahlen der elektrischen Maschinen des Variators (21),
- Erhalten eines Zwischenwerts (v2) durch Regulierung des Radmoments, das in Abhängigkeit von einem Sollwert bestimmt wurde, und
- Entkoppeln des Zwischenwerts (v2) in ein mechanisches Steuerungssignal (u0).

12. Verfahren zur Steuerung nach Anspruch 9 oder 10, **dadurch gekennzeichnet, dass** der zweite Schritt des Verfahrens die folgenden Schritte umfasst:

- Berechnen eines energetischen Steuerungssignals (uw) auf der Basis der Messung der Spannung des Energiepufferelements des elektrischen Variators (21);

- Bestimmen der Drehmomente (^Te1; ^Te2) der ersten und zweiten elektrischen Maschinen des Variators (21) und ihrer Korrekturfaktoren (^Tde1, ^Tde2) auf der Basis der Messung der Drehmomente und der Steuerungssignale (Te1#, Te2#) der elektrischen Maschinen während eines vorhergehenden Zeitraums;
- energetisches Entkoppeln des energetischen Steuerungssignals (uw) und des mechanischen Steuerungssignals (u0), die während des ersten Schritts auf der Basis der bestimmten Drehzahlen und der Korrekturfaktoren der beiden elektrischen Maschinen des Variators (21) erzeugt wurden.

13. Verfahren nach Anspruch 12, **dadurch gekennzeichnet, dass** im ersten Schritt der Schritt des Bestimmens das energetische Steuerungssignal (uw) nutzt, das während des zweiten Schritts in einem vorhergehenden Zeitraum berechnet wurde, und der Schritt des Entkoppelns der Zwischensignale die Werte nutzt, die bestimmt wurden:

- der Drehzahlen ($\omega_e 1$, $\omega_e 2$) der elektrischen Maschinen ($M_{e1}$, 11; $M_{e2}$, 12),
- des Drehmoments ($T_{ice}$) das auf die Kurbelwelle des Wärmekraftmotors (4) angewendet wird,
- des mechanischen Steuerungssignals (uo(n)), das während des Schritts der energetischen Entkopplung im zweiten Schritt in einem vorhergehenden Zeitraum korrigiert wurde,
- der Korrekturfaktoren der Drehmomente, die auf die Rotoren der elektrischen Maschinen angewendet werden,
- der Korrekturfaktoren der Drehmomente, die auf die Kurbelwelle und auf die Räder angewendet werden.

14. Verfahren zur Steuerung nach einem der Ansprüche 1 bis 13, **dadurch gekennzeichnet, dass** es, in einer spezifischen Antriebsart des Fahrzeugs durch die Motorantriebseinheit, darin besteht

- in einem ersten Schritt die Raddrehzahl zu regulieren, ein mechanisches Steuerungssignal (u0) zu erzeugen, das die ermittelten Drehmoment-Drehzahl-Kennlinien repräsentiert; dann
- in einem zweiten Schritt die Drehmomente ($T_{e1}$#; $T_{e2}$#) der ersten und zweiten elektrischen Maschinen auf der Basis des mechanischen Steuerungssignals (u0) zu berechnen, und ein energetisches Steuerungssignal (uw) zu erzeugen, das das Energieniveau reguliert;

indem ausschließlich eine Messung des Ladungsniveaus des Elektroenergie-Pufferelements (Ucapa) und Drehzahlmessungen ($\omega_{e1}$, $\omega_{e2}$) und ($T_{e1}$, $T_{e2}$) des Drehmoments, das von den elektrischen Maschinen ($M_{e1}$, 11, $M_{e2}$, 12) geliefert wird, genutzt werden.

15. Verfahren nach Anspruch 14, **dadurch gekennzeichnet, dass** es die spezifische Antriebsart ermöglicht, die Geschwindigkeit des Fahrzeugs zurückzunehmen, indem die Energie, die von dem Wärmekraftmotor geliefert wird, abgeleitet wird.

16. Verfahren nach Anspruch 14 oder 15, **dadurch gekennzeichnet, dass** der erste Schritt des Verfahrens die folgenden Schritte umfasst:

- Bestimmen der Raddrehzahl und der Drehzahlen der elektrischen Maschinen des Variators (21),
- Erhalten eines Zwischenwerts (v1) durch Regulierung der Raddrehzahl ($\omega$wh), die in Abhängigkeit von einem Sollwert bestimmt wurde, und
- Entkoppeln des Zwischenwerts (v1) in ein mechanisches Steuerungssignal (u0).

17. Verfahren zur Steuerung nach Anspruch 14 oder 15, **dadurch gekennzeichnet, dass** der zweite Schritt des Verfahrens die folgenden Schritte umfasst:

- Berechnen eines energetischen Steuerungssignals (uw) auf der Basis der Messung der Spannung des Energiepufferelements des elektrischen Variators (21);
- Bestimmen der Drehmomente (^Te1; ^Te2) der ersten und zweiten elektrischen Maschinen des Variators (21) und ihrer Korrekturfaktoren (^Tde1, ^Tde2) auf der Basis der Messung der Drehmomente und der Steuerungssignale (Te1#, Te2#) der elektrischen Maschinen während eines vorhergehenden Zeitraums;
- energetisches Entkoppeln des energetischen Steuerungssignals (uw) und des mechanischen Steuerungssignals (u0), die während des ersten Schritts auf der Basis der bestimmten Drehzahlen und der Korrekturfaktoren der beiden elektrischen Maschinen des Variators (21) erzeugt wurden.

18. Verfahren nach Anspruch 17, **dadurch gekennzeichnet, dass** im ersten Schritt der Schritt des Bestimmens das energetische Steuerungssignal (uw) nutzt, das während des zweiten Schritts in einem vorhergehenden Zeitraum berechnet wurde, und der Schritt des Entkoppelns der Zwischensignale die Werte nutzt, die bestimmt wurden:

- der Drehzahlen ($\omega_e 1$, $\omega_e 2$) der elektrischen Maschinen ($M_{e1}$, 11; $M_{e2}$, 12),
- des Drehmoments ($T_{ice}$) das auf die Kurbelwelle des Wärmekraftmotors (4) angewendet wird,
- des mechanischen Steuerungssignals (uo(n)), das während des Schritts der energetischen Entkopplung im zweiten Schritt in einem vorhergehenden Zeitraum korrigiert wurde,
- der Korrekturfaktoren der Drehmomente, die auf die Rotoren der elektrischen Maschinen angewendet werden,
- der Korrekturfaktoren der Drehmomente, die auf die Räder angewendet werden.

19. Vorrichtung zur Steuerung von Stellgliedern einer Motorantriebseinheit, um das Verfahren nach einem der Ansprüche 1 bis 8 durchzuführen, umfassend:

   - ein erstes Kontrollmittel (20), um den Wunsch des Fahrers zu interpretieren,
   - ein zweites Kontrollmittel (22), um einen optimalen Arbeitspunkt des Wärmekraftmotors zu bestimmen, und
   - ein drittes Kontrollmittel (25), um Steuerungssignale der Stellglieder der Motorantriebseinheit zu erzeugen,

   **dadurch gekennzeichnet, dass** das dritte Kontrollmittel (25) umfasst:

   - eine mechanische Kontrolleinheit (100), um ein mechanisches Steuerungssignal (u0) zu erzeugen, das die Drehmoment-Drehzahl-Kennlinien repräsentiert;
   - eine energetische Kontrolleinheit (101), die mit der mechanischen Kontrolleinheit verbunden ist, um Sollwerte der Drehmomente der elektrischen Maschinen des elektrischen Variators des stufenlos einstellbaren Getriebes zu erzeugen.

20. Vorrichtung zur Steuerung nach Anspruch 19, **dadurch gekennzeichnet, dass** das mechanische Signal (u0) die ermittelten Drehmoment-Drehzahl-Kennlinien repräsentiert.

21. Vorrichtung zur Steuerung nach Anspruch 19 oder 20, **dadurch gekennzeichnet, dass** die Entkopplungseinheit (35) der mechanischen Kontrolleinheit (100) umfasst:

   - ein nicht lineares Entkopplungsmodul (110), das mindestens eines der folgenden Signale empfängt:
   - die ermittelten Werte (^Xf) des Zustands der Motorantriebseinheit,
   - die Zwischenwerte der Steuerungssignale (v1, v2), die durch Regulierung auf der Basis eines Sollpunkts des Zustands der Motorantriebseinheit (To*, $\omega_{ice}$*) und der Ermittlung dieser Sollwerte erhalten wurden;
   - einen Wert, der aus einem mechanischen Steuerungssignal (uo(n)) während eines vorhergehenden Schritts während der Feststellung eines energetischen Steuerungssignals berechnet wurde;
   wobei das Modul (110) ein erstes Zwischensignal (u1), das von der mechanischen Steuerung abgeleitet ist, und ein zweites Zwischensignal (u2) erzeugt;
   - ein Modul (111), das auf das erste abgeleitete Signal (u1) eine diskrete Integration anwendet, um einen Wert des mechanischen Steuerungssignals (u0) zu erzeugen;
   - ein Modul (112), das auf den zweiten Ausgang des Moduls (110) eine Sättigung in Abhängigkeit von der ermittelten Drehzahl des Wärmekraftmotors (^$\omega_{ice}$) anwendet;
   - ein Kreislauf (113), der eine Verzögerung auf das Ausgangssignal des Sättigungskreislaufs (112) anwendet, um ein Steuerungssignal des Drehmoments ($T_{ice}$#) des Wärmekraftmotors zu erzeugen.

22. Vorrichtung zur Steuerung nach Anspruch 19 oder 20, **dadurch gekennzeichnet, dass** die Entkopplungseinheit (35) der mechanischen Kontrolleinheit (100) umfasst:

   - ein nicht lineares Entkopplungsmodul (110), das mindestens eines der folgenden Signale empfängt:
   - die ermittelten Zustandswerte (^Xf) der Motorantriebseinheit,
   - die Zwischenwerte eines Steuerungssignals (v1), das durch Regulierung auf der Basis eines Sollpunkts des Zustands des Wärmekraftmotors ($\omega_{ice}$*) und der Ermittlung des Sollwerts erhalten wurde;
   - einen Wert, der aus einem mechanischen Steuerungssignal (uo(n)) während eines vorhergehenden Schritts während der Ermittlung eines energetischen Steuerungssignals berechnet wurde;
   wobei das Modul (110) ein Zwischensignal (u1) erzeugt, das von der mechanischen Steuerung abgeleitet ist;
   - ein Modul (111), das auf das abgeleitete Signal (u1) eine diskrete Integration anwendet, um einen Wert des mechanischen Steuerungssignals (u0) zu erzeugen.

23. Vorrichtung zur Steuerung nach Anspruch 19 oder 20, **dadurch gekennzeichnet, dass** die Entkopplungseinheit (35) der mechanischen Kontrolleinheit (100) umfasst:

- ein nicht lineares Entkopplungsmodul (110), das mindestens eines der folgenden Signale empfängt:
- die ermittelten Zustandswerte (^Xf) der Motorantriebseinheit,
- den Zwischenwert eines Steuerungssignals (v2), das durch Regulierung auf der Basis eines Sollpunkts des Zustands des Radmoments (To*) und der Ermittlung des Sollwerts erhalten wurde;
- einen Wert, der aus einem mechanischen Steuerungssignal (uo(n)) während eines vorhergehenden Schritts während der Ermittlung eines energetischen Steuerungssignals berechnet wurde;
wobei das Modul (110) ein Zwischensignal (u1) erzeugt, das von der mechanischen Steuerung abgeleitet ist;
- ein Modul (111), das auf das abgeleitete Signal (u1) eine diskrete Integration anwendet, um einen Wert des mechanischen Steuerungssignals (u0) zu erzeugen.

**24.** Vorrichtung zur Steuerung nach Anspruch 19 oder 20, **dadurch gekennzeichnet, dass** die Entkopplungseinheit (35) der mechanischen Kontrolleinheit (100) umfasst:

- ein nicht lineares Entkopplungsmodul (110), das mindestens eines der folgenden Signale empfängt:
- die ermittelten Zustandswerte (^Xf) der Motorantriebseinheit,
- den Zwischenwert eines Steuerungssignals (v1), das durch Regulierung auf der Basis eines Sollpunkts der Raddrehzahl (ωwh*) und der Ermittlung des Sollwerts erhalten wurde;
- einen Wert, der aus einem mechanischen Steuerungssignal (uo(n)) während eines vorhergehenden Schritts während der Ermittlung eines energetischen Steuerungssignals berechnet wurde;
wobei das Modul (110) ein Zwischensignal (u1) erzeugt, das von der mechanischen Steuerung abgeleitet ist;
- ein Modul (111), das auf das abgeleitete Signal (u1) eine diskrete Integration anwendet, um einen Wert des mechanischen Steuerungssignals (u0) zu erzeugen.

EP 1 636 079 B1

Fig. 1

S0

Début

S11 — $(\widehat{T}_o, \widehat{\omega}_{e1}, \widehat{\omega}_{e2}, \widehat{\omega}_{ice})$

S12 — $(v_1, v_2) = \text{Regul}(T_o^*, \omega_{ice}^*)$

S1

S13 — $(u_o, T_{ice}^{\#}) = \text{Découplage}(v_1, v_2)$

S21 — $u_w = f(U_{capa})$

S22 — $(\widehat{T}_{e1}, \widehat{T}_{e2}, \widehat{T}_{de1}, \widehat{T}_{de2}) = g(T_{e1}^{\#}, T_{e2}^{\#}, T_{e1}, T_{e2})$

S2

S23

$(T_{e1}^{\#}, T_{e2}^{\#}) = \text{Découplage\_Energ}(u_w, u_0, \widehat{\omega}_{e1}, \widehat{\omega}_{e2}, \widehat{T}_{de1}, \widehat{T}_{de2})$

S3

OUI — Fin de mode d'entrainement — NON

Fin — S5

Mesurer $T_{e1}, T_{e2}, \omega_{e1}, \omega_{e2}, U_{capa}$

S4

Fig. 2

41

EP 1 636 079 B1

Fig. 3

Fig. 4

**Fig. 5**

**Fig. 6**

**Fig. 7**

Fig. 8

Fig. 9

Fig. 10

**Fig. 11**

**Fig. 12**

Fig. 13

S0

Début

S11 — $(\widehat{T}_o, \widehat{\omega}_{e1}, \widehat{\omega}_{e2}, \widehat{\omega}_{ice})$

S12 — $v_2 = \text{Regul}\,(T_o^*)$

S13 — $u_o = \text{Découplage}\,(v_2)$

S1

S21 — $u_w = f\,(U_{capa})$

S22 — $(\widehat{T}_{e1}, \widehat{T}_{e2}, \widehat{T}_{de1}, \widehat{T}_{de2}) = g(T_{e1}^{\#}, T_{e2}^{\#}, T_{e1}, T_{e2})$

S23

$(T_{e1}^{\#}, T_{e2}^{\#}) = \text{Découplage\_Energ}\,(u_w, u_0$ $\widehat{\omega}_{e1}, \widehat{\omega}_{e2}, \widehat{T}_{de1}, \widehat{T}_{de2})$

S2

S3

OUI — Fin de mode d'entrainement — NON

Mesurer $T_{e1}, T_{e2}$, $\omega_{e1}, \omega_{e2}$, $u_{capa}$

Fin — S5

S4

**Fig. 14**

**Fig. 15**

**Fig. 16**

110    111    35

$v_2$

$\widehat{x}_f$ — $F_{dec}$ — $u_1$ → intégrateur discret — $u_0$

$u_0{}^{(n)}$

**Fig. 17**

$U_{capa}$ → unité de calcul énergétique — $u_w$ → 120

$\omega_{e1}, \omega_{e2}$

$u_0$

$T_{e1}, T_{e2}$ → unité de détermination des couples 121

unité de découplage énergétique 122 — $u_0{}^{(n)}$

$u_w$

$\widehat{T}_{de1}, \widehat{T}_{de2}$

retard discret 123

$T_{e1}{}^{\#}, T_{e2}{}^{\#}$

$\widehat{T}_{e1}, \widehat{T}_{e2}$

101

**Fig. 18**

**Fig. 19**

**Fig. 20**

**Fig. 21**

**Fig. 22**

$v_2$

$\widehat{x}_f$

$u_0^{(n)}$

110

$F_{déc}$

$u_1$

111

intégrateur
discret

35

$u_0$

**Fig. 23**

$U_{capa}$

unité de
calcul
énergétique

120

$u_w$

unité de
découplage
énergétique

122

$u_0^{(n)}$

$u_w$

$T_{e1}^{\#}, T_{e2}^{\#}$

$\omega_{e1}, \omega_{e2}$

$u_0$

$\widehat{T}_{de1}, \widehat{T}_{de2}$

$T_{e1}, T_{e2}$

unité de
détermination
des couples

121

retard
discret

123

$\widehat{T}_{e1}, \widehat{T}_{e2}$

**Fig. 24**

101

**EP 1 636 079 B1**

**Documents brevets cités dans la description**

- FR 2834249